# FASCICULE DE BREVET EUROPEEN

(11) **EP 4 003 690 B1**
(45) Date de publication et mention de la délivrance du brevet: **18.10.2023**
(21) Numéro de dépôt: 20756928.6
(22) Date de dépôt: 28.07.2020
(51) Int. Cl.: B29C 48/70, B29C 48/21, B29C 48/25, B29C 48/30, B29C 48/49, B29C 48/305, B29D 30/52

(54) **PREFILIERE DE COEXTRUSION MULTI-VOIES POSSEDANT UN RAIDISSEUR TRAVERSANT MONOLITHIQUE POUVANT ETRE OBTENU PAR FABRICATION ADDITIVE**
MULTIPORT-KOEXTRUSIONSVORDÜSE MIT EINER MONOLITHISCHEN DURCHGANGSVERSTEIFUNG, DIE DURCH GENERATIVE FERTIGUNG HERGESTELLT WERDEN KANN
MULTI-PORT COEXTRUSION PRE-DIE HAVING A MONOLITHIC THROUGH-STIFFENER THAT MAY BE OBTAINED BY ADDITIVE MANUFACTURING

(30) Priorité: 30.07.2019 FR 1908691
(43) Date de publication de la demande: 01.06.2022
(73) Titulaire: Compagnie Générale des Etablissements Michelin, 63000 Clermont-Ferrand (FR)
(72) Inventeur: GOARANT, Christophe, 63040 CLERMONT-FERRAND Cedex 9 (FR)
(74) Mandataire: Redouté, Gilles Pierre
(86) Numéro de dépôt international: PCT/FR2020/051387
(87) Numéro de publication internationale: WO 2021/019182

(56) Documents cités:
- EP-A1- 0 925 903
- EP-A1- 2 520 421
- WO-A1-2019/037901
- DE-A1-102018 222 081
- FR-A1- 2 861 639

## Description

La présente invention concerne le domaine des procédés de coextrusion, et plus particulièrement des procédés de coextrusion de profilés complexes, au cours desquels on extrude simultanément à travers une même filière une pluralité de mélanges élastomériques, c'est-à-dire de mélanges formés à base d'élastomères, issus de plusieurs extrudeuses, de sorte à réunir lesdits mélanges élastomériques en un profilé qui est dit « complexe » car ledit profilé obtenu présente ainsi, dans une même section, un assemblage de plusieurs zones mitoyennes, typiquement un assemblage de plusieurs couches, qui possèdent des compositions distinctes correspondant à la pluralité de mélanges élastomériques.

De tels procédés de coextrusion sont notamment utilisés pour produire sous forme de profilés complexes des bandes de roulement destinées à la fabrication de pneumatiques.

De tels procédés requièrent usuellement un outillage relativement complexe, qui comporte notamment, à la suite d'une tête sur laquelle sont connectées les extrudeuses, une préfilière (« preformer » en anglais) qui comprend plusieurs voies permettant d'acheminer et de conformer progressivement les différents mélanges élastomériques en provenance des extrudeuses, et de faire converger lesdits mélanges élastomériques vers une embouchure qui débouche dans une filière (« die » en anglais), laquelle filière confère à la section du profilé sa forme définitive.

Généralement, un tel outillage est lourd et encombrant, notamment dans la mesure où il doit être capable de supporter des pressions très élevées, nécessaires pour acheminer les mélanges élastomériques, assez fortement visqueux, à travers des voies dont la section de passage peut parfois être relativement étroite et peut donc occasionner d'importantes pertes de charge.

En outre, un tel outillage est souvent coûteux à réaliser, et surtout à mettre au point, dans la mesure où il est nécessaire, chaque fois que l'on souhaite expérimenter un changement de géométrie ou de dimension de l'une des voies de la préfilière, d'usiner une nouvelle préfilière correspondante. Généralement, cet usinage est réalisé par électroérosion, par un procédé de découpe au fil, qui est certes relativement précis et permet de réaliser des formes complexes, mais qui est relativement long à mettre en œuvre. Un outillage selon l'état de technique est divulgue dans FR 2 861 639 A1.

Les objets assignés à l'invention visent par conséquent à remédier aux inconvénients susmentionnés et proposer un nouvel outillage de coextrusion qui soit compact, peu coûteux et rapide à fabriquer, et qui limite la consommation d'énergie lors des opérations d'extrusion.

Les objets assignés à l'invention sont atteints au moyen d'une préfilière destinée à extruder conjointement une pluralité de mélanges élastomériques selon une direction commune dite « direction d'écoulement » en vue d'assembler lesdits mélanges élastomériques en un profilé coextrudé, ladite préfilière comprenant à cet effet, en superposition selon une première direction transverse à la direction d'écoulement, dite « direction d'empilement », une première voie prévue pour acheminer un premier mélange élastomérique, une seconde voie qui est prévue pour acheminer un second mélange élastomérique et qui est séparée de la première voie par une première cloison, puis une troisième voie qui est prévue pour acheminer un troisième mélange élastomérique et qui est séparée de la seconde voie par une seconde cloison, ladite préfilière étant caractérisée en ce qu'elle comporte au moins un raidisseur qui est formé d'un seul tenant avec la première cloison et la seconde cloison et qui s'étend de manière à traverser au moins la seconde voie selon la direction d'empilement transverse à la direction d'écoulement, en présentant ainsi, au moins dans la section de passage de ladite seconde voie, un bord d'attaque qui permet au mélange élastomérique empruntant la seconde voie de contourner ledit raidisseur en se fractionnant en deux sous-écoulements qui s'écoulent, dans ladite seconde voie, de part et d'autre dudit bord d'attaque et donc de part et d'autre dudit raidisseur.

Avantageusement, la présence d'un raidisseur selon l'invention permet de renforcer et rigidifier structurellement les cloisons délimitant les voies, sans pour autant gêner l'écoulement des mélanges élastomériques, ce qui permet de réaliser des cloisons relativement fines, et donc de réduire l'encombrement de la préfilière tout en maximisant la section de passage des voies dans un volume d'outil donné. De la sorte, on peut réduire les pertes de charge, et donc opérer l'extrusion en utilisant une pression d'alimentation moindre, ce qui permet de réduire la consommation d'énergie.

En outre, l'agencement de préfilière proposé par l'invention est particulièrement adapté à une fabrication de ladite préfilière par fabrication additive, en impression tridimensionnelle, ce qui permet de réaliser rapidement la préfilière à moindre coût, et le cas échéant de modifier localement ladite préfilière en effectuant des reprises d'usinage puis des reprises de fabrication additive, de sorte que l'on peut faire évoluer aisément et rapidement la préfilière par itérations successives lors de la phase de mise au point de l'usinage, sans avoir à fabriquer à chaque fois intégralement une nouvelle pré-filière.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective éclatée, un outillage d'extrusion comprenant une préfilière selon l'invention.
La figure 2 illustre, selon une vue en perspective avec arrachement de matière, une installation d'extrusion comprenant un outillage d'extrusion selon l'invention.
La figure 3 illustre, selon une vue partielle en coupe de côté, l'installation d'extrusion de la figure 2, avec, en médaillon, un agrandissement de la préfilière correspondante.
La figure 4 illustre, selon une vue de détail en perspective, un module élémentaire de la préfilière de la figure 1.
La figure 5 est une vue de face du module de la figure 4.
La figure 6 est une vue en projection latérale du module des figures 4 et 5.
La figure 7 est une vue latérale en coupe du module des figures 4 et 5, dans un plan de coupe parallèle à la direction d'empilement et passant à travers le raidisseur.
La figure 8 est une vue de dos du module des figures 4 et 5, faisant apparaître une rainure d'alignement.
La figure 9 est une vue du dessus, dans un plan normal à la direction d'empilement, du module des figures 4 et 5.
La figure 10 illustre, selon une vue en perspective, le principe d'assemblage de plusieurs modules réunis en vue de former une préfilière dont la largeur correspond à celle du profilé visé.
La figure 11 illustre, selon une vue partielle en perspective, une préfilière selon l'invention obtenue par fabrication additive.
La figure 12 illustre, selon une autre vue partielle en perspective, la préfilière de la figure 11.
La figure 13 illustre, selon une vue schématique, le principe de la rugosité induite sur les surfaces inclinées d'une préfilière selon l'invention par la réalisation en gradins propre à la fabrication additive.
Les figures 14A et 14B illustrent, selon des vues respectivement en perspective et de face, le principe de réalisation d'un embout de cloison par arasage puis ajout de matière sur la partie aval d'une cloison de préfilière selon l'invention.
La figure 15 illustre, selon une vue d'ensemble en perspective, une préfilière correspondant à la préfilière des figures 11 et 12
La figure 16A est une vue de face de la préfilière de la figure 15.
La figure 16B illustre, selon une vue schématique de face, un exemple de section de profilé pouvant être obtenu à partir de la préfilière des figures 15 et 16A.

La présente invention concerne une préfilière 1 formant partie d'un outillage d'extrusion, et plus globalement d'une installation d'extrusion 2.

Une telle préfilière 1 est destinée à extruder conjointement une pluralité de mélanges élastomériques selon une direction X1 commune, dite « direction d'écoulement » X1, en vue d'assembler lesdits mélanges élastomériques en un profilé 60 coextrudé.

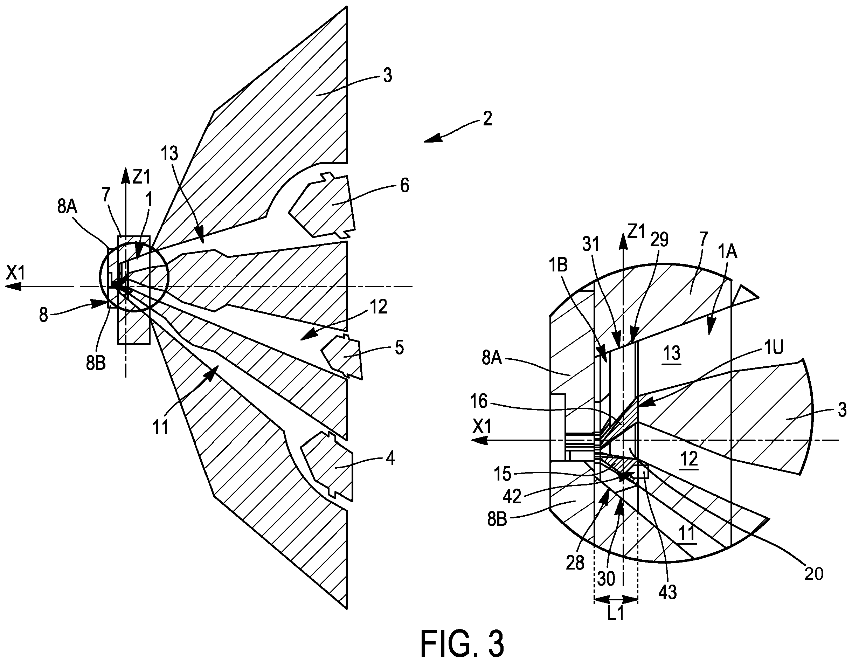

De façon connue en soi, et tel que cela est illustré sur la figure 3, l'installation d'extrusion 2 comprend une tête 3, qui forme un support sur lequel viennent se connecter plusieurs extrudeuses 4, 5, 6. Le nombre d'extrudeuses n'est bien entendu pas limité, l'invention pouvant concerner une installation 2 comptant par exemple trois, quatre, cinq, six, voire sept extrudeuses distinctes.

Chaque extrudeuse 4, 5, 6 est destinée à fournir un mélange élastomérique, et comprend de préférence à cet effet un fourreau, qui vient se fixer de façon étanche sur la tête 3, et à l'intérieur duquel au moins une vis d'extrusion, éventuellement deux vis d'extrusion contrarotatives, sont montées en rotation. Par commodité de représentation, les extrudeuses 4, 5, 6 sont assimilées à leur vis respectives sur la figure 3.

La tête 3 permet d'acheminer les mélanges élastomériques issus des extrudeuses 4, 5, 6, qui sont situées en amont de la tête 3 en référence au sens d'écoulement, jusqu'à la préfilière 1, qui est raccordée en aval de ladite tête 3, à la sortie de ladite tête 3.

De préférence, chaque mélange élastomérique issu d'une extrudeuse 4, 5, 6 distincte est acheminé à travers la tête 3 et jusqu'à la préfilière 1 séparément des autres mélanges élastomériques issus des autres extrudeuses, sans se mélanger auxdits autres mélanges élastomériques. A cet effet, la tête présente de préférence autant de voies 11, 12, 13 distinctes que d'extrudeuses 4, 5, 6. Ces voies de la tête 3 relient chacune le fourreau de l'extrudeuse 4, 5, 6 concernée, situé en amont, à l'entrée d'une voie 11, 12, 13 correspondante de la préfilière 1, située en aval.

Par commodité et unicité de notation, on pourra assimiler les références des voies de la tête 3 aux références des voies correspondantes de la préfilière 1.

On notera que, selon une possibilité de mise en oeuvre, il est envisageable qu'une même extrudeuse 4, 5, 6 alimente plusieurs voies de la préfilière. A cet effet, une ou plusieurs voies de la tête 3 pourront présenter des embranchements, qui dédoubleront la voie de tête concernée et pourront conduire chacun, le cas échéant, à une voie distincte au sein de la préfilière 1.

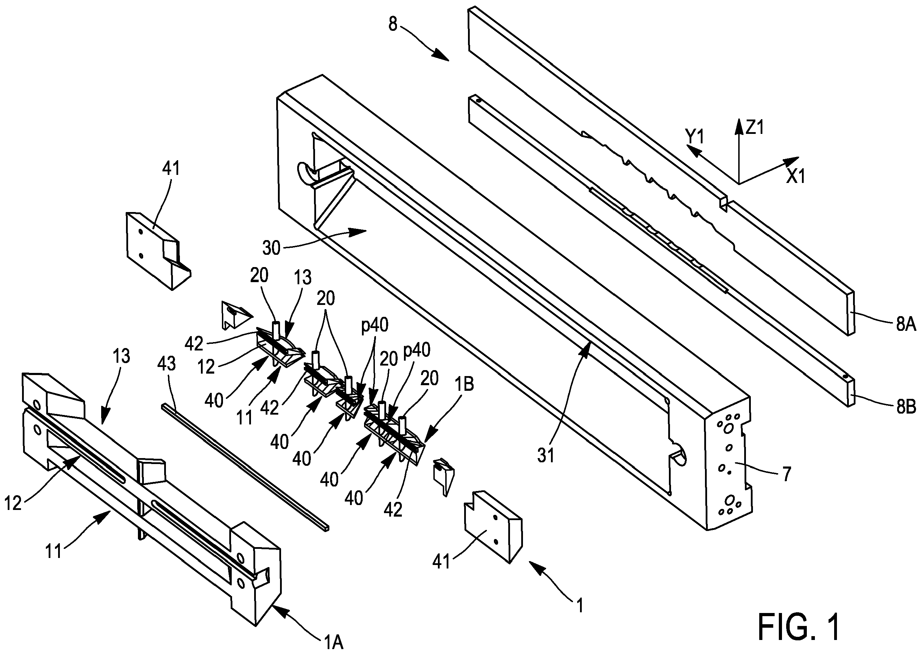

Tel que cela est visible sur les figures 1, 2 et 3, la préfilière 1 est de préférence logée dans une cassette 7, qui est avantageusement montée de manière amovible sur la sortie de la tête 3.

Ladite cassette 7 porte en outre de préférence une filière 8, sur laquelle débouche la préfilière 1, et qui confère au profilé 60 extrudé sa forme définitive, et plus particulièrement qui confère à la section droite du profilé 60 extrudé, c'est-à-dire à la section du profilé qui est normale à la direction d'écoulement X1, son contour extérieur définitif.

Ladite filière 8 est de préférence formée par la réunion d'une première lame 8A supérieure et d'une seconde lame 8B inférieure, pour faciliter l'assemblage puis le démontage et le nettoyage de la filière 8.

Avantageusement, la cassette 7 est facilement interchangeable, et la filière 8 comme la préfilière 1 sont aisément remplaçables au sein de ladite cassette 7, ce qui permet de reconfigurer et/ou de nettoyer aisément l'outillage d'extrusion, selon les besoins de la ligne de production.

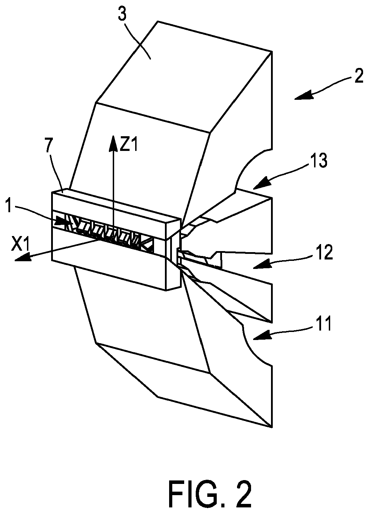

La préfilière 1 peut, tel que cela est visible sur les figures 1 et 2, se subdiviser en une préfilière amont 1A, et une préfilière aval 1B. Ceci permet notamment de faciliter l'assemblage de la préfilière 1 et sa fixation au sein de la cassette 7, puisque la préfilière aval 1B peut être par exemple prise en sandwich entre la préfilière amont 1A, de préférence monobloc, et une paroi de la cassette 7. Ladite préfilière amont 1A peut quant à elle être fixée et serrée sur ladite cassette 7 au moyen de vis de fixation.

A titre indicatif, la longueur L1 de la préfilière aval 1B, considérée selon la direction d'écoulement X1, sera de préférence inférieure ou égale à 30 mm, et de préférence égale ou inférieure à 25 mm.

L'invention concernera de préférence plus spécifiquement la préfilière aval 1B, mais pourra également être mise en oeuvre au sein de la préfilière amont 1A, ou bien, en variante, sur une préfilière 1 qui ne présenterait pas de subdivision amont/aval.

Afin de pouvoir extruder conjointement la pluralité de mélanges élastomériques susmentionnés, la préfilière 1 selon l'invention comprend, en superposition selon une première direction Z1 transverse à la direction d'écoulement X1, dite « direction d'empilement » Z1, une première voie 11 prévue pour acheminer un premier mélange élastomérique, une seconde voie 12 qui est prévue pour acheminer un second mélange élastomérique et qui est séparée de la première voie par une première cloison 15, puis une troisième voie 13 qui est prévue pour acheminer un troisième mélange élastomérique et qui est séparée de la seconde voie 12 par une seconde cloison 16.

La seconde voie 12 forme ainsi un canal intérieur, qui est pris en sandwich entre la première voie 11 et la troisième voie 13 sur au moins une partie, de préférence sur la majorité, voire préférentiellement sur la totalité de la longueur L1 de la préfilière 1, mesurée d'amont en aval de ladite préfilière 1.

Par analogie, on peut considérer que la première cloison 15 forme ainsi le plancher de la seconde voie 12 tandis que la seconde cloison 16 forme le plafond de ladite seconde voie 12.

Cet empilement de voies 11, 12, 13 mitoyennes selon l'invention offre avantageusement, en section droite dans un plan normal à la direction d'écoulement X1, trois sections de passage distinctes, dédiées chacune à l'un des mélanges élastomériques, et qui permettent ainsi d'acheminer parallèlement les différents mélanges élastomériques, sans que ceux-ci se mélangent les uns aux autres, aussi longtemps que lesdits mélanges élastomériques sont séparés par les première et seconde cloisons 15, 16.

A ce titre, les première et seconde cloisons 15, 16 seront de préférence agencées de sorte que la seconde voie 12 ne rejoigne l'une et/ou l'autre des première et troisième voies 11, 13 qui la bordent qu'à l'extrémité aval de la préfilière 1, à l'endroit où les mélanges élastomériques entrent dans la lame de la filière 8, ou bien à proximité immédiate de ladite extrémité aval de la préfilière 1. Pour ce faire, les première et seconde cloisons 15, 16 s'étendront de préférence chacune sur au moins 75%, voire sur au moins 90%, voire sur la totalité, de la longueur hors-tout L1 de la préfilière 1, considérée selon la direction d'écoulement X1.

De préférence, chaque mélange élastomérique provient d'une extrudeuse 4, 5, 6 distincte.

De préférence, le second mélange élastomérique possède une composition distincte de celle du premier mélange élastomérique. Selon une possibilité de mise en oeuvre, chacun des premier, second et troisième mélanges élastomériques présente une composition différente des compositions respectives de chacun des deux autres mélanges élastomériques.

Par convention, on pourra considérer que la direction d'écoulement X1 est représentative de la direction générale d'écoulement commune aux mélanges élastomériques, qui correspond à une droite fictive, ici horizontale sur les figures 1 à 3, tandis que la direction d'empilement Z1 est de préférence perpendiculaire à ladite direction d'écoulement X1, et est ici verticale sur les figures 1 à 3.

La direction d'écoulement X1 correspond avantageusement à la direction longitudinale du profilé 60 extrudé, c'est-à-dire à la direction selon laquelle l'outillage génère la longueur du profilé, tandis que la direction d'empilement Z1 correspond de préférence à l'épaisseur dudit profilé 60.

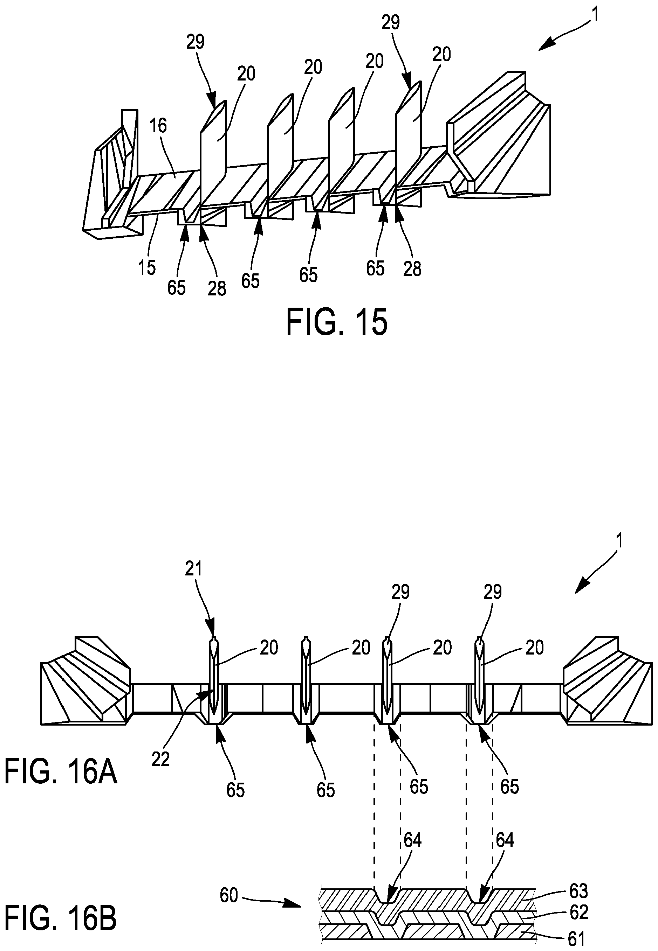

Ainsi, de préférence, la préfilière 1 peut être conçue de manière à générer un profilé 60 stratifié qui présente, empilées selon l'épaisseur dudit profilé, une première couche 61, formant sous-couche 61, issue de la première voie 11 et réalisée dans le premier mélange élastomérique, puis une seconde couche 62, formant couche intermédiaire 62, issue de la seconde voie 12 et réalisée dans le second mélange élastomérique, puis une troisième couche 63 formant surcouche 63, issue de la troisième voie 13 et réalisée dans le troisième mélange élastomérique, tel que cela est illustré sur la figure 16B.

Bien entendu, la préfilière 1 selon l'invention comporte au moins une première, une seconde et une troisième voies 11, 12, 13, empilées les unes sur les autres, et donc au moins une première cloison 15 et une seconde cloison 16, étant entendu que la préfilière 1 peut comporter un nombre de voies empilées supérieur à trois, et autant de cloisons que nécessaire pour séparer deux à deux ces voies mitoyennes empilées selon la direction d'empilement Z1.

Par ailleurs, les première, seconde et troisième voies 11, 12, 13, et par conséquent la première cloison 15 et la seconde cloison 16, s'étendent en largeur selon une seconde direction Y1 transverse à la direction d'écoulement, dite « direction latérale » Y1, qui est également transverse, et de préférence perpendiculaire, à la direction d'empilement Z1. Cette direction latérale Y1 correspondra de préférence à la largeur du profilé 60 extrudé.

Par convention et par commodité de description, on considérera de préférence que ladite direction latérale Y1 est perpendiculaire à la direction d'écoulement X1 et, plus préférentiellement, que ladite direction latérale Y1 forme, avec la direction d'écoulement X1 et la direction d'empilement Z1, un trièdre orthogonal direct.

Selon l'invention, la préfilière 1 comporte au moins un raidisseur 20 qui est formé d'un seul tenant avec la première cloison 15 et la seconde cloison 16 et qui s'étend de manière à traverser au moins la seconde voie 12 selon la direction d'empilement Z1 transverse à la direction d'écoulement X1, de sorte que ledit raidisseur 20 présente ainsi, au moins dans la section de passage de ladite seconde voie, un bord d'attaque 21 qui permet au mélange élastomérique empruntant la seconde voie 12 de contourner ledit raidisseur 20 en se fractionnant en deux sous-écoulements qui s'écoulent, dans ladite seconde voie 12, de part et d'autre dudit bord d'attaque 21 et donc de part et d'autre dudit raidisseur 20.

Les deux sous-écoulements de la même voie 12 s'écouleront ainsi respectivement le long d'une première surface d'écoulement 23 du raidisseur, dite « intrados » 23, et le long d'une seconde surface d'écoulement 24 dudit raidisseur, située de l'autre côté du bord d'attaque 21, et dite « extrados » 24.

De préférence, l'intrados 23 formera une surface incurvée, pour une meilleure fluidité de l'écoulement.

De même, l'extrados 24 formera de préférence une surface incurvée.

Ceci étant, il serait envisageable, dans l'absolu, de réaliser un intrados 23, et/ou respectivement un extrados 24, sous forme d'une surface plane, ou d'un assemblage prismatique de plusieurs surfaces planes qui formeraient des facettes, et qui seraient jointes les unes aux autres par des arêtes, vives ou arrondies.

Avantageusement, quelles que soient par ailleurs les formes de l'intrados 23 et de l'extrados 24, le raidisseur 20 forme une entretoise qui est venue de matière avec les première et seconde cloisons 15, 16 et qui permet d'étayer lesdites cloisons de manière particulièrement solide et stable, puisque ledit raidisseur 20 empêche ainsi très efficacement aussi bien le rapprochement que l'éloignement desdites première et seconde cloisons 15, 16 l'une de l'autre, et ce sans pour autant perturber significativement l'écoulement au sein de la seconde voie 12, puisque ledit raidisseur 20 permet au second mélange élastomérique de se subdiviser latéralement en deux veines au sein de ladite seconde voie, à savoir une première veine empruntant la portion de la seconde voie 12 située latéralement, selon la direction latérale Y1, d'un premier côté du raidisseur 20, et donc délimitée latéralement par l'intrados 23, et une seconde veine empruntant la portion de la seconde voie 12, située latéralement de l'autre côté du raidisseur, à l'opposé de la première veine par rapport au raidisseur 20, seconde veine qui est donc délimitée par l'extrados 24.

On notera que le raidisseur 20 s'étend, selon la direction d'écoulement X1, entre le bord d'attaque 21 susmentionné et un bord de fuite 22, de sorte que l'intrados 23 et l'extrados 24 joignent chacun ledit bord d'attaque 20 audit bord de fuite 22.

De préférence, le bord de fuite 22 est situé en amont de l'extrémité aval de la préfilière 1, de sorte que le raidisseur 20 s'interrompt avant l'extrémité aval de la préfilière 1, et permet donc aux deux sous-écoulements du mélange élastomérique concerné, ici notamment les deux sous-écoulements du second mélange élastomérique, de se rejoindre pour reconstituer un écoulement unique au sein de la voie concernée, avant de sortir de la préfilière 1 et de pénétrer dans la filière 8.

Ceci permet notamment de ne pas perturber l'écoulement du mélange élastomérique concerné à l'approche des lames 8A, 8B de la filière 8.

Grâce au raidisseur 20 qui empêche toute déformation indésirable, il est avantageusement possible de réaliser des cloisons 15, 16 particulièrement fines, sans risque de les voir fléchir sous la pression, en particulier lorsqu'il existe une forte différence de pression entre la seconde voie 12 et l'une ou l'autre des première et troisième voies 11, 13.

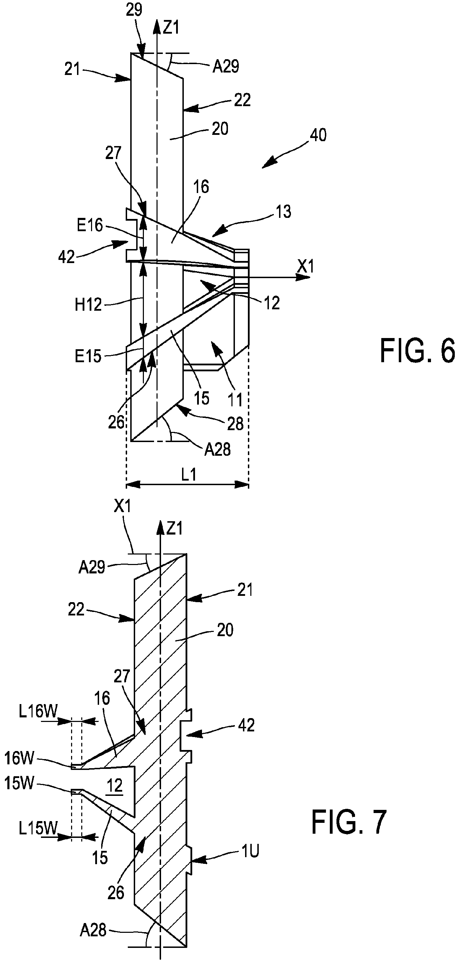

A ce titre, on notera que, de préférence, la première cloison 15 présente une épaisseur E15, mesurée selon la direction d'empilement Z1, tel que cela est visible sur la figure 6, qui est comprise entre 3 mm et 30 mm, de préférence entre 4 mm et 20 mm, voire entre 4 mm et 15 mm, et/ou respectivement que la seconde cloison 16 présente une épaisseur E16, mesurée selon la direction d'empilement Z1, qui est comprise entre 3 mm et 30 mm, et de préférence entre 8 mm et 20 mm.

Plus particulièrement, la première cloison 15 présente de préférence, sur la portion de ladite première cloison 15 qui est située en aval du bord d'attaque 21, c'est-à-dire qui s'étend selon la direction d'écoulement X1 entre ledit bord d'attaque 21 en amont et l'extrémité aval de ladite première cloison 15, une épaisseur E15, mesurée selon la direction d'empilement Z1, dont la valeur maximale est égale ou inférieure à 30 mm, voire égale ou inférieure à 20 mm, et même égale ou inférieure à 15 mm.

De même, la seconde cloison 16 présente de préférence, sur la portion de ladite seconde cloison 16 qui est située en aval du bord d'attaque 21, c'est-à-dire qui s'étend selon la direction d'écoulement X1 entre ledit bord d'attaque 21 en amont et l'extrémité aval de ladite seconde cloison 16, une épaisseur E16, mesurée selon la direction d'empilement Z1, dont la valeur maximale est égale ou inférieure à 30 mm, de préférence égale ou inférieure à 20 mm.

Ainsi, la préfilière 1 peut présenter une structure particulièrement fine, compacte et légère, mais néanmoins très robuste.

Par ailleurs, et le cas échéant en combinaison avec l'une et/ou l'autre des dimensions d'épaisseur de la première cloison E15 et de la seconde cloison E16 précisées ci-dessus, la seconde voie 12 présente de préférence une hauteur de passage H12, mesurée selon la direction d'empilement Z1 entre la première cloison 15 et la seconde cloison 16, entre le bord d'attaque 21 et le bord de fuite 22 du raidisseur 20, qui est comprise entre 1 mm et 50 mm.

Plus particulièrement, la hauteur de passage H12, c'est-à-dire la hauteur de la section de passage de la seconde voie 12 mesurée entre la première cloison 15 et la seconde cloison 16 selon la direction d'empilement Z1, sera de préférence, sur la portion de la seconde voie 12 située en aval du bord d'attaque 21, c'est-à-dire comprise entre le bord d'attaque 21 en amont et l'extrémité aval de la seconde voie 12, égale ou inférieure à 50 mm, voire égale ou inférieure à 30 mm, ou même égale ou inférieure à 20 mm.

Ainsi, ici encore, la préfilière 1 peut présenter une structure particulièrement fine, compacte et légère, mais néanmoins très robuste.

Cette finesse permet notamment d'alimenter et de positionner une fine couche de second mélange élastomérique, acheminé par la seconde voie 12, entre deux couches de mélanges élastomériques plus visqueux et/ou plus épais, issus des première et troisième voies 11, 13, tout en maîtrisant précisément les épaisseurs respectives desdites couches au sein du profilé 60 finalement obtenu.

En outre, le faible encombrement du raidisseur 20, par rapport à la section de passage de la voie 11, 12, 13 dans laquelle ledit raidisseur s'inscrit, permet d'éviter les déperditions excessives d'énergie lorsque l'on force le mélange élastomérique correspondant à progresser à travers ladite voie 11, 12, 13.

La hauteur de passage H12 de la seconde voie 12 dépendra bien entendu de l'épaisseur de la couche 62 de profilé que l'on souhaite obtenir en sortie de ladite seconde voie 12, ainsi que de la nature du second mélange élastomérique affecté à la seconde voie 12.

On notera par ailleurs que, de préférence, la préfilière 1 présente une structure globalement convergente, en ceci que la hauteur H12 de la section de passage de la seconde voie 12, et plus globalement les hauteurs de passage respectives de chacune des première, seconde et troisième voies 11, 12, 13, considérées dans le sens d'empilement Z1, rétrécissent, de préférence de façon monotone, au fur et à mesure que l'on parcourt la préfilière 1 de l'amont vers l'aval, dans la direction d'écoulement X1.

Il en va de préférence de même pour les épaisseurs E15, E16 respectives des première et seconde cloisons 15, 16, qui vont en s'amincissant dans le sens de l'écoulement.

De préférence, le matériau constitutif de la première cloison 15, de la seconde cloison 16, et du au moins un raidisseur 20 formé d'un seul tenant avec lesdites première et seconde cloisons 15, 16 est de l'acier. Avantageusement, l'acier permet de réaliser des structures de voies 11, 12, 13 et de cloisons 15, 16 plus fines et plus robustes que les alliages d'aluminium usuellement employés pour réaliser les préfilières.

A titre indicatif, on pourra utiliser un acier inoxydable, allié au Chrome, Nickel et/ou Molybdène, tel qu'un acier INCONEL^{®} ou MARAGING.

Bien entendu, la fabrication d'un seul tenant permet avantageusement de solidariser les première et seconde cloisons 15, 16 au raidisseur 20, et donc de solidariser lesdites cloisons 15, 16 l'une à l'autre par l'intermédiaire dudit raidisseur 20, sans qu'il soit nécessaire de faire appel à un quelconque moyen de fixation rapporté distinct, du genre vis ou soudure.

De préférence, le raidisseur 20, d'un seul tenant, traverse également, outre la seconde voie 12, au moins l'une des première voies 11 et troisième voies 13, et de préférence chacune des première voies 11 et troisième voies 13, de manière à présenter, dans la section de passage de chacune des voies 11, 12, 13 concernées, un bord d'attaque qui permet au mélange élastomérique empruntant la voie 11, 12, 13 concernée de contourner ledit raidisseur 20 en se fractionnant en deux sous-écoulements qui s'écoulent, dans ladite voie concernée, de part et d'autre dudit bord d'attaque 21 et donc de part et d'autre dudit raidisseur 20, ici de préférence respectivement le long d'une première surface incurvée du raidisseur dite « intrados » 23 et le long d'une seconde surface incurvée dudit raidisseur dite « extrados » 24, comme expliqué plus haut.

Ainsi, en définitive la préfilière 1 peut comporter au moins un raidisseur 20 qui est formé d'un seul tenant avec la première cloison 15 et la seconde cloison 16 et qui s'étend de manière à traverser la première voie 11, la seconde voie 12 et la troisième voie 13 selon la direction d'empilement Z1 transverse à la direction d'écoulement X1, en présentant ainsi, dans la section de passage de chacune desdites première, seconde et troisième voies 11, 12, 13, un bord d'attaque 21 qui permet au mélange élastomérique empruntant la voie concernée de contourner ledit raidisseur en se fractionnant en deux sous-écoulements qui s'écoulent, dans ladite voie concernée, de part et d'autre dudit bord d'attaque et donc de part et d'autre dudit raidisseur, respectivement le long de l'intrados 23 et de l'extrados 24.

Plus globalement, le raidisseur 20 peut avantageusement traverser d'un seul tenant plusieurs voies et plusieurs ensemble de cloisons 15, 16 délimitant lesdites voies, et plus particulièrement l'ensemble des voies 11, 12, 13 présentes sur la hauteur totale de la préfilière 1, considérée selon la direction d'empilement Z1, comme cela est illustré sur les figures 1, 3 et 10.

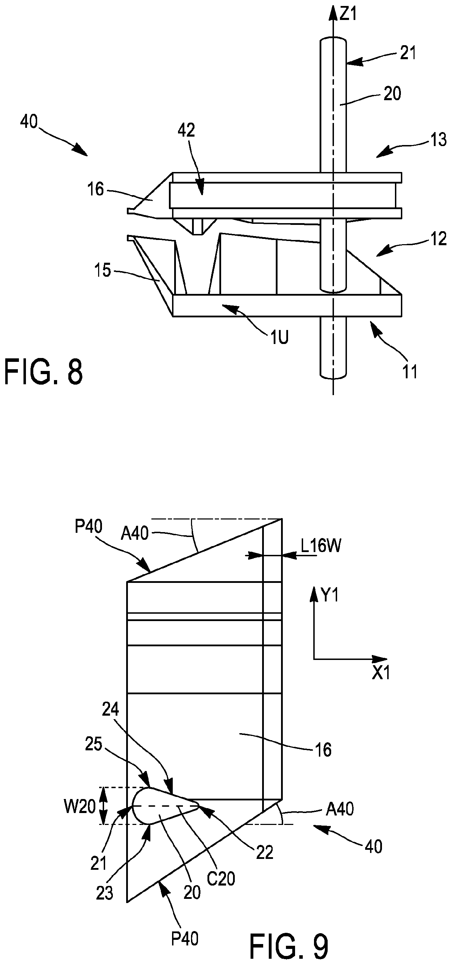

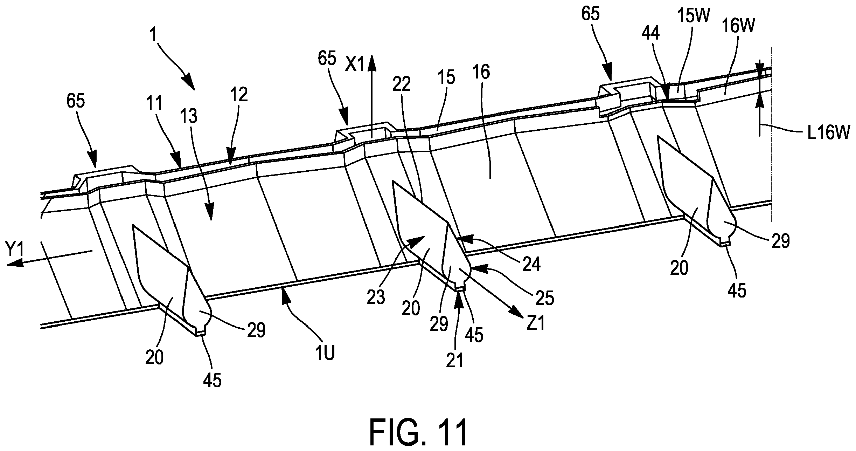

De préférence, le raidisseur 20 s'étend, selon la direction d'écoulement X1, entre le bord d'attaque 21 et un bord de fuite 22, de sorte à présenter, comme dit plus haut, de part et d'autre dudit bord d'attaque, respectivement une première surface d'écoulement 23, de préférence incurvée, dite « intrados » 23, et une seconde surface d'écoulement 24, de préférence incurvée, dite « extrados » 24, surfaces d'écoulement 23, 24 qui joignent chacune le bord d'attaque 21 au bord de fuite 22, et le raidisseur 20 présente une section, délimitée par l'intrados 23 et l'extrados 24, qui forme, par rapport à la corde C20 qui relie en ligne droite le bord d'attaque 21 au bord de fuite 22, un profil biconvexe, de préférence un profil biconvexe symétrique, tel que cela est bien visible sur les figures 9 et 11.

Ainsi, en section normale à la direction d'empilement Z1, le raidisseur 20 présente, au moins dans la section de passage de la seconde voie 12, et de préférence dans les sections de passage d'au moins deux, voire de l'ensemble des première, seconde et troisième voies 11, 12, 13, un profil hydrodynamique qui induit peu de perturbations dans les écoulements des mélanges élastomériques, et limite donc les pertes de charges lorsque les mélanges élastomériques contournent le raidisseur 20, dans leur voie respective.

De préférence, le raidisseur 20 est orienté, en lacet autour de la direction d'empilement Z1, de telle manière que l'angle d'incidence de l'écoulement du mélange élastomérique, qui correspond à l'angle formé entre la direction d'écoulement X1 et la corde C20, en projection dans un plan normal à la direction d'empilement Z1, est sensiblement nul (typiquement inférieur à 5 degrés, voire inférieur à 2 degrés), voire exactement nul, c'est-à-dire que la corde C20 est alignée avec la direction d'écoulement X1.

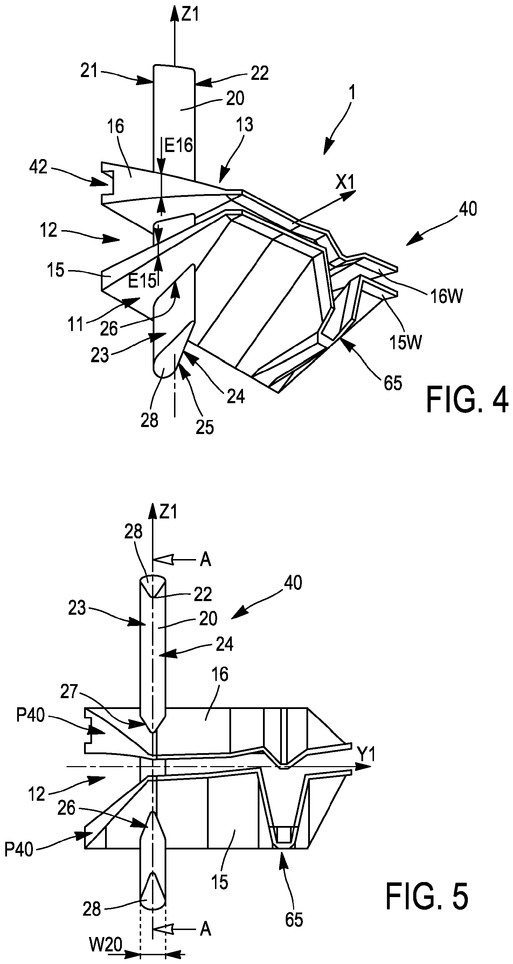

Préférentiellement, tel que cela est bien visible sur les figures 4, 9, 10 ou 11, la section du raidisseur 20 présente un renflement amont 25 de sorte que le profil formé par ladite section, ici plus particulièrement le profil biconvexe, est plus épais dans la moitié amont de la corde C20, du côté du bord d'attaque 21, que dans la moitié aval de ladite corde C20, du côté du bord de fuite 22.

Ainsi, la section du raidisseur 20 présente son épaisseur maximale W20, mesurée selon la direction latérale Y1, plus près du bord d'attaque 21 que du bord de fuite 22.

Plus particulièrement, l'épaisseur du raidisseur 20 augmente de préférence continûment depuis le bord d'attaque 21 jusqu'à un sommet formant le point culminant de l'intrados 23, respectivement de l'extrados 24, par rapport à la corde C20 (c'est-à-dire le point de l'intrados, respectivement de l'extrados, qui est le plus éloigné de la corde selon la direction latérale Y1), lequel sommet est plus proche du bord d'attaque 21 que du bord de fuite 22, puis ladite épaisseur du raidisseur 20 décroît ensuite de façon monotone, jusqu'au bord de fuite 22.

Avantageusement, le renflement 25 du raidisseur 20 procure une assise relativement large du raidisseur sur les cloisons 15, 16, ce qui favorise un ancrage efficace et stable desdites cloisons 15, 16, tout en permettant au raidisseur 20 de présenter une variation d'épaisseur progressive, douce et relativement localisée. Cette variation progressive d'épaisseur dans le sens de l'écoulement permet de favoriser l'écoulement en maximisant globalement la section de passage utile des voies 11, 12, 13 dans lesquelles est implanté le raidisseur 20, notamment la section de passage utile des portions aval desdites voies 11, 12, 13, puisque le raidisseur est justement aminci dans lesdites portions aval des voies.

A titre indicatif, l'épaisseur maximale W20 du raidisseur 20, et donc la largeur qu'occupe ledit raidisseur 20 dans la seconde voie 12, est comprise entre 2 mm et 8 mm, de préférence entre 3 mm et 6 mm, et par exemple égale à 6 mm. Une fois encore, cette finesse limite l'impact de la présence du raidisseur 20 sur l'écoulement dans la voie concernée.

Selon un agencement particulièrement préférentiel, le raidisseur 20 s'étend d'un seul tenant au-delà de la seconde voie 12, à travers au moins l'une des première et troisième voies 11, 13, et les différentes portions constitutives dudit raidisseur 20, qui apparaissent dans les voies concernées et forment un bord d'attaque 21 dans la section de passage desdites voies concernées, présentent une forme cylindrique qui est générée par une section de base constante qui balaie, à travers les différentes voies concernées, une même génératrice rectiligne, parallèle à la direction d'empilement Z1.

Selon un tel agencement préférentiel, le raidisseur 20 présentera ainsi une section (comprise entre l'intrados 23 et l'extrados 24) qui est identique, constante en forme et en dimensions, à travers les différentes voies 11, 12, 13, sur toute la hauteur dudit raidisseur 20 considérée selon la direction d'empilement Z1. Ceci simplifiera notamment la fabrication dudit raidisseur 20, et plus globalement de la préfilière 1.

Selon une possibilité de mise en oeuvre, le raidisseur 20 pourra ainsi s'étendre avec une section constante à travers l'ensemble des trois voies 11, 12, 13, tel que cela est illustré sur les figures 1, 3, 4 et 5.

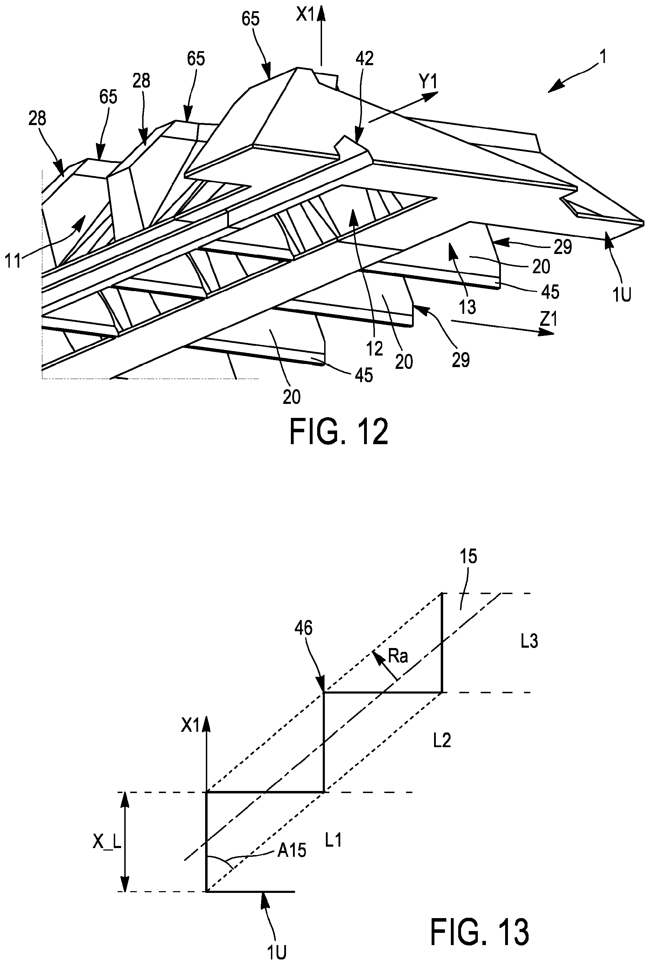

Selon une autre possibilité de mise en oeuvre, tel que cela est visible sur la figure 12, le raidisseur 20 pourra traverser d'un seul tenant, de préférence rectiligne, les trois voies 11, 12, 13, mais présenter dans l'une des voies (ici la première voie 11 sur la figure 12) une section qui est différente de la ou des sections que ledit raidisseur 20 présente dans les deux autres voies. Ici, dans l'exemple de la figure 12, le raidisseur présente une section biconvexe symétrique identique dans la seconde voie 12 et la troisième voie 13, et une section différente, polygonale, dans la première voie 11.

A ce titre, on notera que, tel que cela est bien visible sur les figures 11, 12, 15 et 16A, la position du raidisseur 20 selon la direction latérale Y1 peut avantageusement coïncider avec une zone dans laquelle on obture l'une des voies extrémales, ici la première voie 11, de manière à interrompre la couche correspondante, ici la sous-couche 61, dans le profilé 60, et l'on rabat les autres voies 12, 13, et donc les autres couches 62, 63 du profilé 60, de sorte à créer une dépression, telle qu'un sillon 64 longitudinal, dans ledit profilé 60, tel que cela est visible sur la figure 16B.

Un tel sillon 64 longitudinal préfigure avantageusement le sillon circonférentiel définitif que l'on retrouvera, après cuisson du bandage, parmi les sculptures de la bande de roulement dudit bandage.

Plus globalement, selon une caractéristique préférentielle, la première cloison 15 et la seconde cloison 16 présentent de préférence au moins un décrochement 65, sur la largeur de la préfilière 1 considérée selon la direction latérale Y1, décrochement 65 au niveau duquel la seconde voie 12 et la troisième voie 13 sont toutes deux rabattues vers la première voie 11 selon la direction d'empilement Z1, voire écrasent et interrompent localement ladite première voie 11, de sorte à pouvoir former un sillon 64 longitudinal dans un profilé extrudé 60 qui est destiné à former une bande de roulement pour un bandage, et le raidisseur 20 s'étend, dans la seconde voie 12 et la troisième voie 13, à l'aplomb dudit décrochement 65.

Avantageusement, on peut ainsi positionner le raidisseur 20 dans une zone où l'on a besoin de gérer précisément la distribution, et notamment les épaisseurs, des mélanges élastomériques, ce qui requiert un positionnement précis et stable des cloisons 15, 16. En outre, l'écoulement des mélanges élastomériques étant déjà nécessairement quelque peu perturbé par le décrochement 65, l'ajout du raidisseur 20 dans cette zone n'a pas d'effet aggravant en matière de qualité et de fluidité d'écoulement. Enfin, ceci permet de réaliser le raidisseur 20 dans le prolongement de, et d'un seul tenant avec, une surépaisseur de la première cloison 15 qui interrompt localement la première voie 11 et qui offre en même temps un plan d'extrémité libre 28 qui procure un appui stable contre la cassette 7.

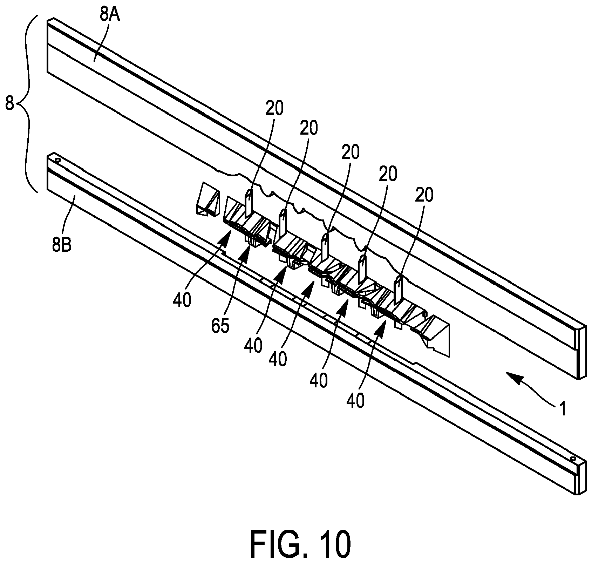

Ceci étant, selon une autre possibilité d'agencement, les raidisseurs 20 pourront être décalés par rapport aux décrochements 65, selon la direction latérale Y1, de sorte que décrochements 65 et raidisseurs 20 seront déphasés spatialement sur la largeur de la préfilière 1, tel que cela est visible sur les figures 5 et 10.

De préférence, et quel que soit par ailleurs l'agencement de sa ou de ses sections, le raidisseur 20 s'étend à la manière d'une poutre en porte-à-faux dans la première voie 11, et/ou respectivement dans la troisième voie 13, et plus globalement dans l'une et/ou l'autre des voies 11, 13 dites « voies extrémales » qui forment les extrémités de la préfilière 1 dans la direction d'empilement Z1.

En d'autres termes, dans ces voies extrémales, ici dans la première voie 11 et/ou la troisième voie 13, la portion du raidisseur 20 qui fait saillie en hauteur à travers la voie extrémale 11, 13 concernée s'étend, dans la voie concernée, depuis une première extrémité, formant un pied d'ancrage 26, 27 d'un seul tenant avec la cloison 15, 16 concernée, et qui rattache ainsi ledit raidisseur 20 à la préfilière 1, jusqu'à une seconde extrémité libre 28, 29.

Ladite extrémité libre 28, 29 n'est pas soutenue ni rattachée à préfilière 1 par une quelconque traverse qui serait distincte et distante de la cloison 15, 16 et qui délimiterait la section de passage de la voie extrémale 11, 13 concernée. Ladite extrémité libre 28, 29 est avantageusement destinée à venir prendre appui, à la manière d'une béquille, contre une pièce de support distincte de la préfilière, ici par exemple contre la cassette 7.

Ainsi, la section de passage de la voie extrémale 11, 13 est, initialement, ouverte, en ceci qu'elle est délimitée par un contour qui n'est pas fermé sur lui-même, et ce jusqu'à ce que la préfilière 1 soit insérée dans la cassette 7 de sorte à ce que la ou les extrémités libres 28, 29 du raidisseur viennent en appui contre une face d'appui 30, 31 qui appartient à une autre pièce, de préférence une face d'appui 30, 31 qui appartient à ladite cassette 7, et qui forme alors une traverse venant fermer sur lui-même le contour de la section de passage de la voie 11, 13 concernée.

Une fois la préfilière 1 en place dans la cassette 7, les voies extrémales 11, 13 sont ainsi délimitées, dans la direction d'empilement Z1, d'une part par la face d'appui 30, 31 de la cassette 7, et d'autre part par la cloison 15, 16 de la préfilière qui est la plus proche selon la direction d'empilement Z1.

Avantageusement, le raidisseur 20 permet à la préfilière 1 de prendre un appui solide et stable contre la paroi très rigide de la cassette 7, appui qui étaye et renforce les première et seconde cloisons 15, 16. Cet appui des extrémités libres 28, 29 du raidisseur 20 contre la cassette 7 permet également avantageusement d'éviter le basculement de la préfilière 1 en tangage autour de la direction latérale Y1.

De préférence, au moins une extrémité libre 28, 29 du raidisseur 20, et de préférence chacune des deux extrémités libres 28, 29 du raidisseur 20, forme un plan incliné, agencé pour venir coopérer avec une face d'appui biseautée conjuguée de la cassette 7, de manière à assurer un auto-blocage de la préfilière 1 dans la cassette 7, par effet de coin, à l'encontre de la poussée exercée par les écoulements dans la direction d'écoulement X1.

Ainsi, selon un agencement préférentiel, illustré sur les figures 1, 3, 6 et 12, le raidisseur 20 s'étend, selon la direction d'empilement Z1, depuis un premier plan d'extrémité 28 jusqu'à un second plan d'extrémité 29, et lesdits premier et second plans d'extrémité 28, 29 sont inclinés par rapport à la direction d'écoulement X1 selon une orientation qui fait converger lesdits plans d'extrémité 28, 29 l'un vers l'autre en direction de l'aval de l'écoulement, de telle sorte que lesdits premier et second plans d'extrémité 28, 29 puissent venir coopérer respectivement avec une première face d'appui biseautée 30 et une seconde face d'appui biseautée 31 d'une cassette 7 recevant la préfilière 1, afin d'assurer un centrage automatique de la préfilière 1 au sein de ladite cassette 7, ainsi qu'une retenue de ladite préfilière 1 au sein de la cassette 7 dans le sens de l'écoulement.

On note A28, A29 les angles d'inclinaison respectifs du premier plan d'extrémité 28 et du second plan d'extrémité 29. Ces angles d'inclinaison A28, A29 pourront être égaux ou au contraires différents, et seront de préférence compris entre 5 degrés et 60 degrés, et par exemple entre 20 degrés et 45 degrés.

De préférence, tel que cela est visible sur les figures 1, 10, 11 et 12, la préfilière 1 comprend plusieurs raidisseurs 20 qui sont répartis de manière à être espacés les uns des autres selon la direction latérale Y1, chacun desdits raidisseurs 20 étant formé d'un seul tenant avec la première cloison 15 et la seconde cloison 16, et s'étendant selon la direction d'empilement Z1, de préférence parallèlement à ladite direction d'empilement Z1, afin de traverser au moins la seconde voie 12, et de préférence également au moins l'une, voire chacune, des première et troisième voies 11, 13.

Avantageusement, la multiplication des raidisseurs 20, et donc des points d'appui, sur la largeur de la préfilière 1, permet d'éviter de laisser une portée trop longue de cloison 15, 16 sans soutien, et donc d'assurer un maintien homogène des cloisons 15, 16 selon la direction latérale Y1, de sorte que l'on évite tout fléchissement significatif desdites cloisons 15, 16. La relative finesse des raidisseurs 20 permet toutefois de ne pas gêner les écoulements, et de conserver une structure légère et compacte.

Chacun des raidisseurs 20 de la pluralité de raidisseurs répartis sur la largeur de la préfilière 1 pourra présenter tout ou partie des caractéristiques décrites ci-dessus. En outre, de préférence, plusieurs desdits raidisseurs 20, et de préférence tous les raidisseurs 20 présents sur la largeur de la préfilière 1, présenteront la même forme, et plus globalement les mêmes caractéristiques de formes et de dimensions. En d'autres termes, par commodité de fabrication, on pourra utiliser un même modèle de raidisseur 20 avantageusement dupliqué à l'identique en plusieurs emplacements de la largeur de la préfilière 1.

Selon une autre possibilité de mise en oeuvre, la préfilière 1 peut être fractionnée, en largeur le long la direction latérale Y1, en une pluralité de modules individuels 40 (ou « modules élémentaires ») qui comprennent chacun une portion de la largeur de la première cloison 15 et une portion de la largeur de la seconde cloison 16, et par conséquent une portion de la largeur de la première voie 11, de la seconde voie 12, et de la troisième voie 13, tel que cela est illustré sur les figures 1 et 10.

Lesdits modules individuels 40 sont avantageusement aboutés deux à deux, de manière réversible, bord à bord, le long de la direction latérale Y1.

Ainsi, chaque module individuel 40 correspond à une tranche de largeur de la préfilière 1, et au moins deux de ces modules individuels 40, destinés à être aboutés côte à côte dans la direction latérale Y1, comprennent chacun une portion du « sandwich » formé par les première, seconde et troisième voies 11, 12, 13 superposées. De la sorte, une fois lesdits modules individuels 40 accolés l'un à l'autre, la portion de première voie 11 du premier desdits au moins deux modules communique avec, et prolonge latéralement, la portion de première voie 11 du second module voisin, et plus préférentiellement des modules adjacents. Il en va avantageusement de même pour les seconde et troisième voies 12, 13.

En réunissant de front les modules individuels 40, on reconstitue ainsi la préfilière 1 complète.

A titre indicatif, la préfilière 1 comprendra de préférence, pour former sa largeur complète, au moins deux modules individuels 40, par exemple de trois à sept modules individuels 40.

Le nombre de modules individuels 40 pourra bien entendu être ajusté en fonction de la largeur de la préfilière. Ainsi, on pourra prévoir typiquement de trois à sept modules individuels pour une préfilière 1 dont la largeur est comprise entre 400 mm et 500 mm, ce qui est typiquement le cas lorsque la préfilière est destinée à la fabrication de profilés 60 utilisés pour former la bande de roulement de bandages pneumatiques destinés aux véhicules poids-lourd. On pourra de même prévoir un nombre de modules individuels supérieur pour une préfilière dont la largeur atteint 800 mm, comme cela est le cas pour les préfilières destinées à extruder des profilés 60 utilisés pour former la bande de roulement de bandages pneumatiques destinés aux véhicules agricoles.

Avantageusement, un tel agencement modulaire de la préfilière 1 permet de retoucher ou de remplacer au besoin un module individuel 40 séparément, sans que cette retouche ou ce remplacement n'ait de conséquence sur les autres modules individuels 40.

Ceci simplifie grandement la mise au point de l'outillage, puisque le processus de mise au point ne nécessite pas de produire une nouvelle préfilière entière à chaque retouche, ni, par conséquent, de mettre au rebut toute une préfilière à chaque itération du processus de mise au point.

De préférence, au moins l'un des modules individuels 40 comprend au moins un raidisseur 20 formé d'un seul tenant avec la portion de la première cloison 15 et la portion de la seconde cloison 16 dudit module 40.

De façon préférentielle, plusieurs des modules individuels 40 et notamment au moins deux modules individuels 40 adjacents, comprennent chacun au moins un raidisseur 20 formé d'un seul tenant avec la portion de la première cloison 15 et la portion de la seconde cloison 16 du module 40 concerné.

Selon une caractéristique préférentielle, qui peut au demeurant faire l'objet d'une invention à part entière, que les modules individuels 40 constitutifs de la préfilière 1 comportent ou non des raidisseurs 20 selon l'invention, les modules individuels 40 sont aboutés selon des plans de joint P40 disposés en oblique de sorte que lesdits plans de joint P40 forment chacun, en projection dans le plan formé par la direction d'écoulement X1 et la direction latérale Y1, un angle A40 non nul par rapport à la direction d'écoulement X1, dit « angle de lacet » A40, tel que cela est visible sur la figure 9, afin que les modules individuels 40 se bloquent mutuellement dans le sens de l'écoulement, tel que cela est visible sur les figures 1 et 10.

On notera que, dans le repère (X1, Y1, Z1), l'angle d'inclinaison A40 des plans de joint P40 des modules individuels 40 correspond ici à un angle de déviation en lacet, tandis que les angles d'inclinaison A28, A29 des premier et second plans d'extrémité 28, 29 correspondent à des angles d'inclinaison en tangage.

Par ailleurs, l'outillage comprendra de préférence des flasques 41, qui sont disposés latéralement de part et d'autre de la préfilière 1, et plus particulièrement de part et d'autre de la série des modules individuels 40 qui se trouvent alignés de front pour former la largeur de ladite préfilière 1.

Lesdits flasques 41 permettent de maintenir latéralement la préfilière 1 au sein de la cassette 7, et plus particulièrement de bloquer transversalement les modules individuels 40 en exerçant une compression latérale qui presse lesdits modules individuels 40 les uns contre les autres, en rapprochement mutuel, selon la direction latérale Y1.

De préférence, les flasques 41 viendront en prise sur les extrémités latérales de la préfilière 1, et plus particulièrement sur les modules individuels 40 formant les extrémités latérales de la préfilière 1, selon des plans de joint obliques, inclinés en lacet par rapport à la direction d'écoulement X1, afin d'obtenir un effet auto-bloquant similaire à celui déjà mentionné plus haut.

La préfilière 1 est ainsi solidement maintenue dans et par le cadre fermé que forme la cassette 7 qui entoure la préfilière 1 aussi bien dans la direction d'empilement Z1 que dans la direction transverse Y1.

Selon une autre possibilité de mise en oeuvre, la préfilière 1 (ici plus particulièrement la préfilière aval 1B), que ladite préfilière comporte du reste un ou plusieurs raidisseurs 20 répartis sur sa largeur, peut, au lieu d'être formée par la réunion de plusieurs modules individuels 40, être formée intégralement d'un seul tenant, tel que cela est illustré sur les figures 11 et 12.

Selon une telle variante, on formera d'un seul tenant une première cloison 15 couvrant toute la largeur de la préfilière 1, une seconde cloison 16 couvrant toute la largeur de la préfilière 1, et l'ensemble des raidisseurs 20 associés, répartis sur ladite largeur totale.

Un tel agencement monolithique de la préfilière 1 dans son ensemble est particulièrement adapté à la fabrication d'un outillage de production destiné à une production de profilé 60 en série, ledit outillage présentant ainsi sa forme définitive, telle qu'elle résulte d'une mise au point préalable.

Un tel outillage peut en effet être aisément dupliqué pour être remplacé à l'identique une fois usé. En outre, une préfilière 1 monolithique n'est avantageusement pas sujette à des phénomènes d'usure des plans de joint P40, ni de prise de jeu ou d'apparition de décalages entre des modules individuels 40, ce qui accroît la fiabilité et la durée de vie de l'outillage en production.

Par ailleurs, la préfilière 1 peut comporter une rainure d'alignement 42, destinée à recevoir une clavette 43.

De préférence, ladite clavette 43 peut servir d'interface de liaison entre une préfilière amont 1A monolithique, et une préfilière aval 1B modulaire, tel que cela est illustré sur la figure 3.

La présence d'une telle rainure d'alignement 42 permet avantageusement de faciliter le montage de la préfilière 1 au sein de la cassette 7.

La clavette 43 se présente de préférence sous la forme d'un parallélépipède rectangle, qui s'étend en longueur selon la direction latérale Y1.

A titre indicatif, pour assurer une rigidité suffisante, la clavette 43 présentera de préférence une hauteur, considérée selon la direction d'empilement Z1, supérieure ou égale à 4 mm. L'évidement de de la rainure d'alignement 42 présentera donc lui aussi une hauteur d'au moins 4 mm, légèrement supérieure en pratique à la hauteur de la clavette 43, car majorée d'une valeur égale au jeu de guidage nécessaire.

Selon une possibilité d'agencement, la rainure d'alignement 42 est creusée dans le chant amont de l'une des première et seconde cloisons 15, 16.

L'épaisseur E15, E16 de ladite cloison 15, 16 sera alors adaptée en conséquence, et sera par exemple d'au moins 8 mm si la clavette 43 présente une hauteur de 4 mm.

Bien entendu, la préfilière 1, et en particulier la préfilière aval 1B, peut comporter une rainure d'alignement 42, et coopérer alors avec une clavette 43, aussi bien lorsque ladite préfilière 1, 1B est réalisée d'un seul tenant que lorsque ladite préfilière 1, 1B est obtenue par l'assemblage de modules individuels 40 distincts.

Ainsi, plus préférentiellement, les modules individuels 40 pourront présenter chacun une rainure d'alignement 42 qui s'étend d'un bord à l'autre du module individuel 40 concerné selon la direction latérale Y1, de manière à ce que lesdits modules individuels 40 puissent être alignés sur une même clavette 43 commune, engagée dans l'ensemble desdites rainures d'alignement 42.

La clavette 43 s'étend de préférence d'un seul tenant sur toute la largeur de la préfilière 1, pour permettre aux rainures des modules individuels 40 mitoyens de s'aligner deux à deux dans le prolongement l'une de l'autre, suivant la direction fixée par ladite clavette 43, direction qui correspond ici à la direction latérale Y1.

Avantageusement, un tel système à rainure 42 et clavette 43 permet un assemblage simple et rigide de la préfilière 1 modulaire.

En outre, un tel agencement à rainure 42 et clavette 43 autorise le remplacement, au sein de l'outillage, d'une préfilière modulaire provisoire (destinée à la mise au point) par une préfilière définitive monolithique (destinée à la production), ou inversement, du fait que ces deux types de préfilières 1 utilisent en définitive des moyens d'alignement et de fixation identiques.

En variante, et notamment dans le cas d'une préfilière 1 monolithique, et plus particulièrement dans le cas d'une préfilière aval 1B monolithique, on pourra, au lieu de creuser une rainure 42 dans l'épaisseur de l'une des cloisons 15, 16, selon un agencement « femelle » (mortaise) et de rapporter dans ladite rainure 42 une clavette 43 distincte, faire en sorte que la clavette 43 soit formée d'un seul tenant avec ladite cloison 15, 16, selon un agencement « mâle » formant un tenon. Avantageusement, la clavette 43 ainsi intégrée à la structure de la cloison 15, 16 permettra de renforcer ladite cloison 15, 16, au lieu de la fragiliser localement, et autorisera ainsi la réalisation d'épaisseurs de cloison E15, E16 particulièrement fines, notamment à l'extrémité amont de la préfilière aval 1B, et/ou plus globalement en amont du bord d'attaque 21 du raidisseur 20, ou à l'aplomb du bord d'attaque 21 du raidisseur 20. La clavette 43 formant tenon pourra avantageusement coopérer avec une rainure d'alignement creusée dans la portion amont de l'outillage, plus particulièrement dans l'extrémité aval de la préfilière amont 1A.

Selon la variante « mâle » ci-dessus, si la préfilière 1, et plus particulièrement la préfilière aval 1B, comprend une pluralité de modules individuels 40 tel que cela a été décrit plus haut, alors chaque module individuel 40 pourra comprendre une portion du tenon que la clavette 43 forme d'un seul tenant avec la portion de cloison 15, 16 correspondante dudit module individuel 40, de sorte que lesdits modules individuels 40 pourront venir s'emboîter et s'aligner dans une rainure d'alignement commune, creusée dans la portion amont de l'outillage, plus particulièrement dans l'extrémité aval de la préfilière amont 1A.

En définitive, quelle que soit la variante, mâle ou femelle, considérée, la préfilière 1 présentera donc de préférence un système d'alignement des modules individuels 40 par emboîtement sur un élément d'alignement partagé (rainure ou clavette).

Selon une possibilité d'agencement, la première cloison 15 et la seconde cloison 16 présentent, à la sortie des voies 11, 12, 13, des prolongements 15W, 16W dits « murs » 15W, 16W, qui sont parallèles entre eux et parallèles à la direction d'écoulement X1.

De tels murs 15W, 16W permettent de contrôler précisément la formation des interfaces de jonction entre les différents mélanges élastomériques.

Les murs 15W, 16W présentent de préférence une épaisseur fine, considérée selon la direction d'empilement Z1, épaisseur qui est préférentiellement comprise entre 0,8 mm et 2 mm, et plus préférentiellement égale à 1 mm. Cette épaisseur sera de préférence constante sur la longueur L15W, L16W du mur 15W, 16W, considérée le long de la direction d'écoulement X1.

A titre indicatif, la longueur L15W, L16W desdits murs 15W, 16W, le long de la direction d'écoulement X1, sera de préférence comprise entre 1 mm et 6 mm, par exemple égale à 3 mm.

On notera que lesdits murs 15W, 16W peuvent s'interrompre légèrement en amont du seuil d'entrée dans la filière 8, c'est-à-dire légèrement en amont de la position des lames 8A, 8B dans la direction d'écoulement X1.

En variante, les murs 15W, 16W pourraient s'étendre jusqu'en aval du seuil d'entrée dans la filière 8, de sorte à pénétrer entre les lames 8A, 8B.

Toutefois, selon une autre variante préférentielle, les murs 15W, 16W se terminent à l'aplomb du seuil d'entrée dans la filière 8, c'est-à-dire à la position où débutent les lames 8A, 8B.

De préférence, tel que cela est visible sur la figure 11, lesdits murs 15W, 16W présentent une indentation 44, de sorte que lesdits murs 15W, 16W s'interrompent à des longueurs L15W, L16W différentes dans le sens de l'écoulement, selon la position qu'occupent lesdits murs 15W, 16W sur la largeur de la préfilière.

Ainsi, on peut régler finement le comportement de l'extrudat destiné à former le profilé 60, et notamment contrôler finement les conditions de jonction entre le second mélange élastomérique issu de la seconde voie 12 d'une part, et l'un et/ou l'autre des premier et troisième mélanges élastomériques issus respectivement de la première voie 11 et de la troisième voie 13, au moment où lesdits mélanges élastomériques atteignent et s'engagent entre les lames 8A, 8B de la filière 8.

De préférence, l'ensemble monobloc formé par la première cloison 15, la seconde cloison 16 et l'au moins un raidisseur 20 est obtenu par fabrication additive, de préférence à partir d'une poudre d'acier.

Par « fabrication additive », on entend un procédé de fabrication par ajout de matière.

La fabrication additive consiste de préférence à imprimer en trois dimensions la préfilière 1, en réalisant celle-ci par couches L1, L2, L3... successives, chaque couche étant obtenue par exemple en portant à son point de fusion une poudre métallique, ici à base d'acier, au moyen d'un laser, ou bien d'un faisceau d'électrons, selon un motif qui correspond à celui de la portion de préfilière 1 correspondante, puis en laissant la zone fondue se solidifier de sorte à permettre à la matière de s'agglomérer. Un processus similaire d'agglomération par fusion locale puis refroidissement est répété pour ajouter la couche suivante, et ainsi de suite.

Avantageusement, la fabrication additive permet notamment de réaliser de manière rapide et efficace, à faible coût, et avec peu de matière, des formes non démoulables, comme cela est ici le cas de la partie du raidisseur 20 intégrée à la seconde voie 12, entre les cloisons 15, 16.

La réalisation par fabrication additive pourra donner lieu à certains aménagements spécifiques de la forme de la préfilière 1.

Ainsi, notamment, si l'on considère que la fabrication par couches est réalisée en empilant les couches L1, L2, L3 successives selon la direction d'écoulement X1, et en débutant donc par une première couche L1 qui correspond à la face amont de la préfilière 1 (ici plus particulièrement la face amont 1U de la préfilière aval 1B que l'on accole ensuite contre la face aval conjuguée de la préfilière amont 1A), alors la préfilière 1 pourra présenter, tel que cela est visible sur la figure 11, depuis ladite face amont 1U et précédant les bords d'attaque 21 des raidisseurs 20, des ergots 45 de stabilisation, destinés à former un piétement stable à l'aplomb de chaque raidisseur 20 ; un tel piétement offre avantageusement, pendant la fabrication, un appui aux couches suivantes, constitutives dudit raidisseur 20.

De même, la rainure d'alignement 42 pourra présenter un fond de forme sensiblement triangulaire, ou en voûte, tel que cela est visible sur la figure 12, plutôt qu'un fond plat, du fait que ledit fond est obtenu par une superposition de plusieurs couches, dont chacune progresse légèrement en porte-à-faux vers le centre de la rainure 42 par rapport aux couches qui la précèdent. En effet, en fabrication additive, il est difficile voire impossible de réaliser directement en une seule couche un linteau qui enjamberait de façon rectiligne, sans fléchir, la hauteur complète de la rainure 42 (considérée selon la direction d'empilement Z1).

De préférence, tel que cela a été indiqué plus haut, la fabrication additive est réalisée par couches L1, L2, L3... successives créées progressivement selon une direction de fabrication qui correspond à la direction d'écoulement X1, à partir d'un plan de base (ici la face amont 1U susmentionnée) qui est normal à ladite direction d'écoulement X1.

De préférence, au moins une partie de la première cloison 15 et/ou au moins une partie de la seconde cloison 16 présente une inclinaison par rapport à la direction d'écoulement X1, et donc par rapport à la direction de fabrication, typiquement pour conférer à la préfilière 1 sa forme globalement convergente déjà évoquée plus haut. De la sorte, la superposition des couches L1, L2, L3 successives forme des gradins 46, tel que cela est schématisé sur la figure 13.

De préférence, la préfilière 1 conserve à demeure, c'est-à-dire de manière permanente, y compris lors de son usage en production, le long de ces portions inclinées en gradins 46, une rugosité arithmétique Ra qui est comprise entre 4 µm et 30 µm, et qui correspond à la rugosité brute de fabrication additive définie par lesdits gradins 46.

On notera que cette rugosité arithmétique Ra comprise en 4 µm et 30 µm pourra notamment se retrouver sur l'intrados 23 et l'extrados 24 du raidisseur 20.

En effet, les inventeurs ont constaté que, de façon surprenante, une telle rugosité brute résiduelle, bien que très supérieure aux rugosités usuellement mises en oeuvre en matière d'extrusion, était parfaitement admissible, en ceci que ladite rugosité Ra brute n'était absolument pas gênante pour l'écoulement des mélanges élastomériques, si bien qu'il n'était donc pas nécessaire d'atténuer par polissage les gradins 46 issus de la fabrication additive. Ainsi, on peut notamment s'épargner des opérations de finition des surfaces inclinées de la préfilière 1, ce qui procure avantageusement des gains de temps et de coût de fabrication.

La rugosité Ra dépendra essentiellement ici de l'épaisseur X_L des couches L1, L2, L3, de préférence identique à chaque couche, et par exemple comprise entre 20 µm et 120 µm, ainsi que de l'angle d'inclinaison A15 de la cloison concernée par rapport à la direction d'écoulement X1 (ou, de manière équivalente ici, de l'angle complémentaire audit angle d'inclinaison A15, formé entre ladite cloison 15 et la face amont 1U).

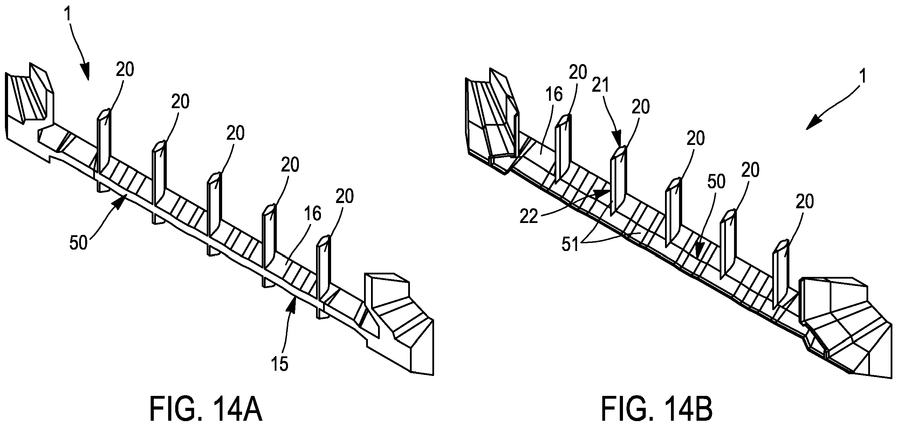

Selon une possibilité de mise en oeuvre qui peut constituer une invention à part entière, applicable à toute préfilière 1 comprenant au moins une cloison 15, 16, et ce que ladite préfilière 1 comprenne ou pas un raidisseur 20 selon l'invention, des extrémités aval de la première cloison 15 et/ou de la seconde cloison 16, ici de préférence les murs 15W, 16W décrits plus haut, présentent une structure composite qui comprend d'une part une embase permanente 50 qui fait partie intégrante de la cloison 15, 16 concernée, et qui est réalisée en même temps que la cloison 15, 16, et ici en même temps que le raidisseur 20, dans le même matériau d'origine que ladite cloison 15, 16, et d'autre part un embout 51 dit « embout rechargeable » 51, qui est obtenu en arasant tout d'abord l'extrémité de la cloison 15, 16 pour en retirer de la matière et former ainsi l'embase permanente 50, tel que cela est illustré sur la figure 14A, puis en rapportant ensuite de la matière sur ladite embase permanente 50 afin de constituer un embout 51, solidaire de ladite embase permanente 50, embout 51 qui fait donc saillie vers l'aval, par rapport à l'embase permanente 50, dans le sens de l'écoulement, tel que cela est illustré sur la figure 14B.

Ainsi, on peut avantageusement mettre au point la préfilière 1, et plus particulièrement ajuster précisément la longueur des première et seconde cloisons 15, 16, et plus particulièrement la longueur des murs 15W, 16W et la profondeur des indentation 44, par un processus itératif, rapide et peu onéreux à mettre en oeuvre, et où se succèdent opération d'arasage, permettant de raccourcir la cloison 15, 16, puis recharge en matière nouvelle, permettant d'allonger la cloison 15, 16 jusqu'à la taille voulue.

De préférence, la préfilière 1 est initialement réalisée, avant arasage, par fabrication additive, comme décrit plus haut. Une fois la préfilière solidifiée, il est possible de l'extraire de l'outillage d'impression tridimensionnelle, de la tester au sein de la tête d'extrusion, puis de la modifier en retirant de la matière, par exemple par polissage, aux emplacements voulus des extrémités des cloisons 15, 16, pour former des embases 50 qui vont servir de point de départ à une reprise de fabrication.

De préférence, la recharge en matière nouvelle pour former l'embout 51 est réalisée elle aussi par fabrication additive, en réintroduisant la préfilière 1 arasée dans l'outillage d'impression tridimensionnelle, de sorte à pouvoir effectuer une reprise de fabrication additive à partir de l'embase 50.

On notera également que, tel que cela est visible sur les figures 14A et 14B, l'arasage peut également s'étendre à une portion aval du ou des raidisseurs 20, de sorte que la recharge en matière nouvelle formant l'embout 51 concerne non seulement une partie (aval) des cloisons 15, 16, mais également une partie (aval) du ou des raidisseurs 20.

## Revendications

1. Préfilière (1) destinée à extruder conjointement une pluralité de mélanges élastomériques selon une direction commune dite « direction d'écoulement » (X1) en vue d'assembler lesdits mélanges élastomériques en un profilé (60) coextrudé, ladite préfilière comprenant à cet effet, en superposition selon une première direction transverse à la direction d'écoulement, dite « direction d'empilement » (Z1), une première voie (11) prévue pour acheminer un premier mélange élastomérique, une seconde voie (12) qui est prévue pour acheminer un second mélange élastomérique et qui est séparée de la première voie (11) par une première cloison (15), puis une troisième voie (13) qui est prévue pour acheminer un troisième mélange élastomérique et qui est séparée de la seconde voie (12) par une seconde cloison (16), ladite préfilière étant **caractérisée en ce qu'**elle comporte au moins un raidisseur (20) qui est formé d'un seul tenant avec la première cloison (15) et la seconde cloison (16) et qui s'étend de manière à traverser au moins la seconde voie (12) selon la direction d'empilement (Z1) transverse à la direction d'écoulement (X1), en présentant ainsi, au moins dans la section de passage de ladite seconde voie, un bord d'attaque (21) qui permet au mélange élastomérique empruntant la seconde voie (12) de contourner ledit raidisseur (20) en se fractionnant en deux sous-écoulements qui s'écoulent, dans ladite seconde voie (12), de part et d'autre dudit bord d'attaque.

2. Préfilière selon la revendication 1 **caractérisée en ce que** le raidisseur (20), d'un seul tenant, traverse également au moins l'une, et de préférence chacune, des première et troisième voies (11, 13), de manière à présenter, dans la section de passage de chacune des voies (11, 12, 13) concernées, un bord d'attaque (21) qui permet au mélange élastomérique empruntant la voie concernée de contourner ledit raidisseur en se fractionnant en deux sous-écoulements qui s'écoulent, dans ladite voie concernée (11, 12, 13), de part et d'autre dudit bord d'attaque et donc de part et d'autre dudit raidisseur (20).

3. Préfilière selon la revendication 1 ou 2 **caractérisée en ce que** le raidisseur (20) s'étend, selon la direction d'écoulement (X1), entre le bord d'attaque (21) et un bord de fuite (22), de sorte à présenter, de part et d'autre dudit bord d'attaque (21), respectivement une première surface d'écoulement, de préférence incurvée, dite « intrados » (23), et une seconde surface d'écoulement, de préférence incurvée, dite « extrados » (24), qui joignent chacune le bord d'attaque (21) au bord de fuite (22), et **en ce que** ledit raidisseur présente une section, délimitée par l'intrados (23) et l'extrados (24), qui forme, par rapport à la corde (C20) qui relie en ligne droite le bord d'attaque (21) au bord de fuite (22), un profil biconvexe, de préférence un profil biconvexe symétrique.

4. Préfilière selon la revendication 3 **caractérisée en ce que** la section du raidisseur (20) présente un renflement amont de sorte que le profil biconvexe est plus épais dans la moitié amont de la corde (C20), du côté du bord d'attaque (21), que dans la moitié aval de ladite corde (C20), du côté du bord de fuite (22).

5. Préfilière selon l'une des revendications précédentes **caractérisée en ce que** le raidisseur (20) s'étend, selon la direction d'empilement (Z1), depuis un premier plan d'extrémité (28) jusqu'à un second plan d'extrémité (29), et **en ce que** lesdits premier et second plans d'extrémité (28, 29) sont inclinés par rapport à la direction d'écoulement (X1) selon une orientation qui fait converger lesdits plans d'extrémité (28, 29) l'un vers l'autre en direction de l'aval de l'écoulement, de telle sorte que lesdits premier et second plans d'extrémité (28, 29) puissent venir coopérer respectivement avec une première face d'appui biseautée (30) et une seconde face d'appui biseautée (31) d'une cassette (7) recevant la préfilière (1), afin d'assurer un centrage automatique de la préfilière (1) au sein de ladite cassette (7), ainsi qu'une retenue de ladite préfilière au sein de la cassette (7) dans le sens de l'écoulement.

6. Préfilière selon l'une des revendications précédentes **caractérisée en ce que** les première, seconde et troisième voies (11, 12, 13), et par conséquent la première cloison (15) et la seconde cloison (16), s'étendent en largeur selon une seconde direction (Y1) transverse à la direction d'écoulement (X1), dite « direction latérale » (Y1), qui est également transverse, et de préférence perpendiculaire, à la direction d'empilement (Z1), et **en ce que** la préfilière comprend plusieurs raidisseurs (20) répartis de manière à être espacés les uns des autres selon ladite direction latérale (Y1), chacun desdits raidisseurs (20) étant formé d'un seul tenant avec la première cloison (15) et la seconde cloison (16), et s'étendant selon la direction d'empilement (Z1) afin de traverser au moins la seconde voie (12), et de préférence également au moins l'une, voire chacune, des première et troisième voies (11, 13).

7. Préfilière selon l'une des revendications précédentes, **caractérisée en ce que** les première, seconde et troisième voies (11, 12, 13), et par conséquent la première cloison (15) et la seconde cloison (16), s'étendent en largeur selon une seconde direction (Y1) transverse à la direction d'écoulement, dite « direction latérale » (Y1), qui est également transverse, et de préférence perpendiculaire, à la direction d'empilement (Z1), **en ce que** la préfilière est fractionnée, en largeur le long la direction latérale (Y1), en une pluralité de modules individuels (40) qui comprennent chacun une portion de la largeur de la première cloison (15) et une portion de la largeur de la seconde cloison (16), et par conséquent une portion de la largeur de la première voie (11), de la seconde voie (12), et de la troisième voie (13), **en ce que** lesdits modules individuels (40) sont aboutés deux à deux, de manière réversible, bord à bord, le long de la direction latérale (Y1), et **en ce que** au moins l'un desdits modules individuels (40), et de préférence plusieurs desdits modules individuels (40), comprennent chacun au moins un raidisseur (20) formé d'un seul tenant avec la portion de la première cloison (15) et la portion de la seconde cloison (16) du module individuel concerné.

8. Préfilière selon la revendication 7 **caractérisée en ce que** les modules individuels (40) sont aboutés selon des plans de joint (P40) disposés en oblique de sorte que lesdits plans de joint forment chacun, en projection dans le plan formé par la direction d'écoulement (X1) et la direction latérale (Y1), un angle non nul par rapport à la direction d'écoulement (X1), dit « angle de lacet » (A40), afin que les modules individuels (40) se bloquent mutuellement dans le sens de l'écoulement.

9. Préfilière selon la revendication 7 ou 8 **caractérisée en ce que** les modules individuels (40) présentent chacun une rainure d'alignement (42) qui s'étend d'un bord à l'autre du module individuel concerné selon la direction latérale (Y1), de manière à ce que lesdits modules individuels (40) puissent être alignés sur une même clavette (43) commune, engagée dans l'ensemble desdites rainures d'alignement (42).

10. Préfilière selon l'une des revendications précédentes **caractérisée en ce que** la première cloison (15) présente une épaisseur (E15), mesurée selon la direction d'empilement (Z1), comprise entre 3 mm et 30 mm, de préférence entre 4 mm et 20 mm, voire entre 4 mm et 15 mm, et/ou respectivement la seconde cloison (16) présente une épaisseur (E16), mesurée selon la direction d'empilement (Z1), comprise entre 3 mm et 30 mm, et de préférence entre 8 mm et 20 mm.

11. Préfilière selon l'une des revendications précédentes **caractérisée en ce que** la première cloison (15) et la seconde cloison (16) présentent au moins un décrochement (65) au niveau duquel la seconde voie (12) et la troisième voie (13) sont toutes deux rabattues vers la première voie (11) selon la direction d'empilement (Z1), de sorte à pouvoir former un sillon (64) longitudinal dans un profilé extrudé (60) qui est destiné à former une bande de roulement pour un bandage, et **en ce que** le raidisseur (20) s'étend, dans la seconde voie 12 et la troisième voie 13, à l'aplomb dudit décrochement (65).

12. Préfilière selon l'une des revendications précédentes **caractérisée en ce que** l'ensemble monobloc formé par la première cloison (15), la seconde cloison (16) et l'au moins un raidisseur (20) est obtenu par fabrication additive, de préférence à partir d'une poudre d'acier.

13. Préfilière selon la revendication 12 **caractérisée en ce que** la fabrication additive est réalisée par couches (L1, L2, L3) successives créées progressivement selon une direction de fabrication qui correspond à la direction d'écoulement (X1), à partir d'un plan de base (1U) normal à ladite direction d'écoulement (X1), **en ce qu'**au moins une partie de la première cloison (15) et/ou au moins une partie de la seconde cloison (16) présente une inclinaison par rapport à la direction d'écoulement (X1), et donc par rapport à la direction de fabrication, de sorte que la superposition des couches successives forme des gradins (46), et **en ce que** la préfilière (1) conserve à demeure, le long de ces portions inclinées en gradins, une rugosité arithmétique Ra comprise entre 4 µm et 30 µm qui correspond à la rugosité brute de fabrication additive définie par lesdits gradins (46).

14. Préfilière selon l'une des revendications précédentes **caractérisée en ce que** des extrémités aval de la première cloison (15) et/ou de la seconde cloison (16) présentent une structure composite qui comprend d'une part une embase permanente (50) qui fait partie intégrante de la cloison (15, 16) concernée, et qui est réalisée en même temps que la cloison et le raidisseur (20) dans le même matériau d'origine que ladite cloison (15, 16), et d'autre part un embout (51) dit « embout rechargeable », qui est obtenu en arasant tout d'abord l'extrémité de la cloison (15) pour en retirer de la matière et former ainsi l'embase (50) permanente, puis en rapportant ensuite de la matière sur ladite embase permanente (50) afin de constituer un embout (51), solidaire de ladite embase, embout qui fait donc saillie vers l'aval, par rapport à l'embase permanente (50), dans le sens de l'écoulement.

15. Préfilière selon l'une des revendications précédentes **caractérisée en ce que** le raidisseur (20) s'étend d'un seul tenant au-delà de la seconde voie (12), à travers au moins l'une des première et troisième voies (11, 13), et **en ce que** les différentes portions constitutives dudit raidisseur qui apparaissent dans les voies concernées et forment un bord d'attaque (21) dans la section de passage desdites voies concernées, présentent une forme cylindrique générée par une section de base constante qui balaie, à travers les différentes voies concernées, une même génératrice rectiligne, parallèle à la direction d'empilement (Z1).

## Patentansprüche

1. Vordüse (1), die dazu bestimmt ist, eine Vielzahl von elastomeren Mischungen zusammen in einer gemeinsamen Richtung, die als "Strömungsrichtung" (X1) bezeichnet wird, zu extrudieren, um die elastomeren Mischungen zu einem koextrudierten Profil (60) zu verbinden, wobei die Vordüse zu diesem Zweck in Überlagerung in einer zur Strömungsrichtung quer verlaufenden ersten Richtung, die als "Stapelrichtung" (Z1) bezeichnet wird, Folgendes umfasst: eine erste Bahn (11), die dazu vorgesehen ist, eine erste elastomere Mischung zu befördern, eine zweite Bahn (12), die dazu vorgesehen ist, eine zweite elastomere Mischung zu befördern, und die von der ersten Bahn (11) durch eine erste Trennwand (15) getrennt ist, und schließlich eine dritte Bahn (13), die dazu vorgesehen ist, eine dritte elastomere Mischung zu befördern, und die von der zweiten Bahn (12) durch eine zweite Trennwand (16) getrennt ist, wobei die Vordüse **dadurch gekennzeichnet ist, dass** sie mindestens eine Versteifung (20) aufweist, die einstückig mit der ersten Trennwand (15) und der zweiten Trennwand (16) ausgebildet ist und die sich so erstreckt, dass sie zumindest die zweite Bahn (12) in der zur Strömungsrichtung (X1) quer verlaufenden Stapelrichtung (Z1) durchquert, wobei sie somit zumindest im Abschnitt der Durchquerung der zweiten Bahn eine Vorderkante (21) aufweist, die es der die zweite Bahn (12) durchlaufenden elastomeren Mischung ermöglicht, die Versteifung (20) zu umgehen, indem sie sich in zwei Teilströme aufteilt, die in der zweiten Bahn (12) auf beiden Seiten der Vorderkante verlaufen.

2. Vordüse nach Anspruch 1, **dadurch gekennzeichnet, dass** die einstückige Versteifung (20) außerdem mindestens eine, vorzugsweise jede der ersten und der dritten Bahn (11, 13) durchquert, sodass sie im Abschnitt der Durchquerung jeder der betreffenden Bahnen (11, 12, 13) eine Vorderkante (21) aufweist, die es der die betreffende Bahn durchlaufenden elastomeren Mischung ermöglicht, die Versteifung zu umgehen, indem sie sich in zwei Teilströme aufteilt, die in der betreffenden Bahn (11, 12, 13) auf beiden Seiten der Vorderkante und somit auf beiden Seiten der Versteifung (20) verlaufen.

3. Vordüse nach Anspruch 1 oder 2, **dadurch gekennzeichnet, dass** sich die Versteifung (20) in der Strömungsrichtung (X1) zwischen der Vorderkante (21) und einer Hinterkante (22) erstreckt, so dass sie auf beiden Seiten der Vorderkante (21) eine vorzugsweise gekrümmte erste Strömungsfläche, die als "Unterseite" (23) bezeichnet wird, bzw. eine vorzugsweise gekrümmte zweite Strömungsfläche, die als "Oberseite" (24) bezeichnet wird, aufweist, die jeweils die Vorderkante (21) mit der Hinterkante (22) verbinden, und dass die Versteifung einen durch die Unterseite (23) und die Oberseite (24) begrenzten Abschnitt aufweist, der in Bezug auf den Strang (C20), der die Vorderkante (21) geradlinig mit der Hinterkante (22) verbindet, ein bikonvexes Profil, vorzugsweise ein symmetrisches bikonvexes Profil, bildet.

4. Vordüse nach Anspruch 3 **dadurch gekennzeichnet, dass** der Abschnitt der Versteifung (20) eine stromaufwärtige Wölbung aufweist, so dass das bikonvexe Profil in der stromaufwärtigen Hälfte des Strangs (C20) auf der Seite der Vorderkante (21) dicker ist als in der stromabwärtigen Hälfte des Strangs (C20) auf der Seite der Hinterkante (22).

5. Vordüse nach einem der vorangehenden Ansprüche, **dadurch gekennzeichnet, dass** sich die Versteifung (20) in der Stapelrichtung (Z1) von einer ersten Endebene (28) bis zu einer zweiten Endebene (29) erstreckt und dass die erste und die zweite Endebene (28, 29) in Bezug auf die Strömungsrichtung (X1) in einer Ausrichtung geneigt sind, die Endebenen (28, 29) in stromabwärtiger Richtung der Strömung zueinander konvergieren lässt, sodass die erste und die zweite Endebene (28, 29) jeweils mit einer ersten abgeschrägten Auflagefläche (30) bzw. einer zweiten abgeschrägten Auflagefläche (31) einer die Vordüse (1) aufnehmenden Kassette (7) zusammenwirken können, um eine automatische Zentrierung der Vordüse (1) innerhalb der Kassette (7) sowie einen Halt der Vordüse innerhalb der Kassette (7) in Strömungsrichtung zu gewährleisten.

6. Vordüse nach einem der vorangehenden Ansprüche **dadurch gekennzeichnet, dass** sich die erste, die zweite und die dritte Bahn (11, 12, 13) und folglich die erste Trennwand (15) und die zweite Trennwand (16) in der Breite in einer quer zur Strömungsrichtung (X1) verlaufenden zweiten Richtung (Y1) erstrecken, die als "Seitenrichtung" (Y1) bezeichnet wird und ebenfalls quer und vorzugsweise senkrecht zur Stapelrichtung (Z1) verläuft, und dass die Vordüse mehrere Versteifungen (20) umfasst, die so verteilt sind, dass sie in der Seitenrichtung (Y1) voneinander beabstandet sind, wobei die Versteifungen (20) einstückig mit der ersten Trennwand (15) und der zweiten Trennwand (16) ausgebildet sind und sich in der Stapelrichtung (Z1) erstrecken, um zumindest die zweite Bahn (12) und vorzugsweise auch mindestens eine oder sogar jede der ersten und der dritten Bahn (11, 13) zu durchqueren.

7. Vordüse nach einem der vorangehenden Ansprüche, **dadurch gekennzeichnet, dass** sich die erste, die zweite und die dritte Bahn (11, 12, 13) und folglich die erste Trennwand (15) und die zweite Trennwand (16) in der Breite in einer zur Strömungsrichtung quer verlaufenden zweiten Richtung (Y1) erstrecken, die als "Seitenrichtung" (Y1) bezeichnet wird und ebenfalls quer und vorzugsweise senkrecht zur Stapelrichtung (Z1) verläuft, und dass die Vordüse in der Breite entlang der Seitenrichtung (Y1) in eine Vielzahl von Einzelmodulen (40) unterteilt ist, die jeweils einen Teil der Breite der ersten Trennwand (15) und einen Teil der Breite der zweiten Trennwand (16) und folglich einen Teil der Breite der ersten Bahn (11), der zweiten Bahn (12) und der dritten Bahn (13) umfassen, dass die Einzelmodule (40) paarweise, reversibel und Kante an Kante entlang der Seitenrichtung (Y1) aneinandergefügt sind und dass mindestens eines der Einzelmodule (40) und vorzugsweise mehrere der Einzelmodule (40) jeweils mindestens eine Versteifung (20) umfassen, die einstückig mit dem Teil der ersten Trennwand (15) und dem Teil der zweiten Trennwand (16) des betreffenden Einzelmoduls ausgebildet ist.

8. Vordüse nach Anspruch 7, **dadurch gekennzeichnet, dass** die Einzelmodule (40) in schräg angeordneten Verbindungsebenen (P40) aneinandergefügt sind, sodass die Verbindungsebenen jeweils in der Projektion in der durch die Strömungsrichtung (X1) und die Seitenrichtung (Y1) gebildeten Ebene einen Winkel ungleich Null in Bezug auf die Strömungsrichtung (X1) bilden, der als "Gierwinkel" (A40) bezeichnet wird, damit sich die Einzelmodule (40) in Strömungsrichtung gegenseitig blockieren.

9. Vordüse nach Anspruch 7 oder 8, **dadurch gekennzeichnet, dass** die Einzelmodule (40) jeweils eine Ausrichtungsnut (42) aufweisen, die sich in der Seitenrichtung (Y1) von einer Kante des betreffenden Einzelmoduls zur anderen erstreckt, sodass die Einzelmodule (40) auf einem gleichen gemeinsamen Keil (43), der in die Gesamtheit der Ausrichtungsnuten (42) eingreift, ausgerichtet sein können.

10. Vordüse nach einem der vorangehenden Ansprüche, **dadurch gekennzeichnet, dass** die erste Trennwand (15) eine in der Stapelrichtung (Z1) gemessene Dicke (E15) zwischen 3 mm und 30 mm, vorzugsweise zwischen 4 mm und 20 mm oder sogar zwischen 4 mm und 15 mm, aufweist und/oder die zweite Trennwand (16) eine in der Stapelrichtung (Z1) gemessene Dicke (El6) zwischen 3 mm und 30 mm und vorzugsweise zwischen 8 mm und 20 mm aufweist.

11. Vordüse nach einem der vorangehenden Ansprüche, **dadurch gekennzeichnet, dass** die erste Trennwand (15) und die zweite Trennwand (16) mindestens einen Absatz (65) aufweisen, an dem die zweite Bahn (12) und die dritte Bahn (13) beide in Stapelrichtung (Z1) zur ersten Bahn (11) hin gebogen sind, um eine Längsfurche (64) in einem extrudierten Profil (60) bilden zu können, das dazu bestimmt ist, einen Laufstreifen für einen Reifen zu bilden, und dass sich die Versteifung (20) in der zweiten Bahn 12 und der dritten Bahn 13 lotrecht zum Absatz (65) erstreckt.

12. Vordüse nach einem der vorangehenden Ansprüche, **dadurch gekennzeichnet, dass** die durch die erste Trennwand (15), die zweite Trennwand (16) und die mindestens eine Versteifung (20) ausgebildete einstückige Einheit durch additive Fertigung, vorzugsweise aus einem Stahlpulver, erhalten wird.

13. Vordüse nach Anspruch 12, **dadurch gekennzeichnet, dass** die additive Fertigung in aufeinanderfolgenden Schichten (L1, L2, L3) erfolgt, die schrittweise in einer der Strömungsrichtung (X1) entsprechenden Fertigungsrichtung ausgehend von einer zur Strömungsrichtung (X1) senkrechten Grundebene (1U) erzeugt werden, dass mindestens ein Teil der ersten Trennwand (15) und/oder mindestens ein Teil der zweiten Trennwand (16) eine Neigung in Bezug auf die Strömungsrichtung (X1) und somit in Bezug auf die Fertigungsrichtung aufweist, sodass die Überlagerung der aufeinanderfolgenden Schichten Stufen (46) bildet, und dass die Vordüse (1) entlang dieser stufenförmigen geneigten Abschnitte eine arithmetische Rauheit Ra zwischen 4 um und 30 um beibehält, die der durch die Stufen (46) definierten Rohrauheit der additiven Fertigung entspricht.

14. Vordüse nach einem der vorangehenden Ansprüche, **dadurch gekennzeichnet, dass** stromabwärtige Enden der ersten Trennwand (15) und/oder der zweiten Trennwand (16) eine Verbundstruktur aufweisen, die einerseits einen permanenten Sockel (50) umfasst, der integraler Bestandteil der betreffenden Trennwand (15, 16) ist und zu derselben Zeit wie die Trennwand und die Versteifung (20) aus demselben Ausgangsmaterial wie die Trennwand (15, 16) gefertigt wird, und andererseits ein Endstück (51), das als "nachfüllbares Endstück" bezeichnet wird und erhalten wird, indem zunächst das Ende der Trennwand (15) abgetragen wird, um Material zu entfernen und so den permanenten Sockel (50) zu bilden, und indem anschließend Material auf den permanenten Sockel (50) aufgebracht wird, um ein fest mit dem Sockel verbundenes Endstück (51) zu bilden, das somit stromabwärts in Bezug auf den permanenten Sockel (50) in Strömungsrichtung vorsteht.

15. Vordüse nach einem der vorangehenden Ansprüche, **dadurch gekennzeichnet, dass** sich die Versteifung (20) einstückig über die zweite Bahn (12) hinaus durch mindestens eine der ersten und der dritten Bahn (11, 13) erstreckt und dass die verschiedenen konstituierenden Abschnitte der Versteifung, die in den betreffenden Bahnen erscheinen und eine Vorderkante (21) im Durchgangsabschnitt der betreffenden Bahnen aufweisen, eine zylindrische Form aufweisen, die durch einen konstanten Basisabschnitt erzeugt wird, der durch die verschiedenen betreffenden Bahnen hindurch eine gleiche geradlinige Erzeugende parallel zur Stapelrichtung (Z1) durchläuft.

## Claims

1. Preformer (1) which is designed to extrude jointly a plurality of elastomer mixes in a common direction known as the "direction of flow" (X1), in order to assemble the said elastomer mixes into a co-extruded profiled element (60), the said preformer comprising for this purpose, superimposed in a first direction transverse to the direction of flow, known as the "direction of stacking" (Z1), a first channel (11) which is designed to convey a first elastomer mix, a second channel (12) which is designed to convey a second elastomer mix, and is separated from the first channel (11) by a first partition (15), then a third channel (13) which is designed to convey a third elastomer mix, and is separated from the second channel (12) by a second partition (16), the said preformer being **characterised in that** it comprises at least one stiffener (20) which is formed integrally with the first partition (15) and the second partition (16), and extends such as to pass through at least the second channel (12) in the direction of stacking (Z1) transverse to the direction of flow (X1), thus having, at least in the cross-section of passage of the said second channel, a leading edge (21) which allows the elastomer mix following the second channel (12) to pass around the said stiffener (20) by dividing up into two sub-flows, which flow, in the said second channel (12), on both sides of the said leading edge.

2. Preformer according to claim 1, **characterised in that** the stiffener (20) in a single piece also passes through at least one, and preferably each, of the first and third channels (11, 13), such as to have, in the cross-section of passage of each of the channels (11, 12, 13) concerned, a leading (21) edge which allows the elastomer mix following the channel concerned to pass around the said stiffener, splitting into two sub-flows which flow, in the said channel concerned (11, 12, 13), on both sides of the said leading edge, and thus on both sides of the said stiffener (20).

3. Preformer according to claim 1 or 2, **characterised in that** the stiffener (20) extends in the direction of flow (X1) between the leading edge (21) and a trailing edge (22), such as to have, on both sides of the said leading edge (21), respectively a first flow surface, which is preferably curved, known as the "bottom surface" (23), and a second flow surface, which is preferably curved, known as the "top surface" (24), which flow surfaces each join the leading edge (21) to the trailing edge (22), and **in that** the stiffener has a cross-section, delimited by the bottom surface (23) and the top surface (24), which forms, relative to the chord (C20) which connects the leading edge (21) to the trailing edge (22) in a straight line, a biconvex profile, and preferably a symmetrical biconvex profile.

4. Preformer according to claim 3, **characterised in that** the cross-section of the stiffener (20) has an upstream bulge, such that the biconvex profile is thicker in the upstream half of the chord (C20), on the leading edge (21) side, than in the downstream half of the said chord (C20), on the trailing edge (22) side.

5. Preformer according to one of the preceding claims, **characterised in that** the stiffener (20) extends, in the direction of stacking (Z1), from a first end plane (28) to a second end plane (29), and **in that** the said first and second end planes (28, 29) are inclined relative to the direction of flow (X1) according to an orientation which makes the said end planes (28, 29) converge towards one another in the downstream direction of the flow, such that the said first and second end planes (28, 29) can cooperate respectively with a first bevelled support face (30) and a second bevelled support face (31) of a box (7) receiving the preformer (1), in order to ensure automatic centring of the preformer (1) within the said box (7), as well as retention of the said preformer within the box (7) in the direction of flow.

6. Preformer according to one of the preceding claims, **characterised in that** the first, second and third channels (11, 12, 13), and consequently the first partition (15) and the second partition (16), extend in width in a second direction (Y1) transverse to the direction of flow (X1), known as the "lateral direction" (Y1), which is also transverse, and preferably perpendicular to the direction of stacking (Z1), and **in that** the preformer comprises a plurality of stiffeners (20) which are distributed such as to be spaced from one another in the said lateral direction (Y1), each of the said stiffeners (20) being formed integrally with the first partition (15) and the second partition (16), and extending in the direction of stacking (Z1), in order to pass through at least the second channel (12), and preferably also at least one, or each, of the first and third channels (11, 13).

7. Preformer according to one of the preceding claims, **characterised in that** the first, second and third channels (11, 12, 13), and consequently the first partition (15) and the second partition (16), extend in width in a second direction (Y1) transverse to the direction of flow, known as the "lateral direction" (Y1), which is also transverse, and preferably perpendicular to the direction of stacking (Z1), and **in that** the width of the preformer is split in the lateral direction (Y1) into a plurality of individual modules (40) which each comprise a portion of the width of the first partition (15) and a portion of the width of the second partition (16), and consequently a portion of the width of the first channel (11), the second channel (12), and the third channel (13), **in that** the said individual modules (40) abut in pairs, reversibly, edge to edge, in the lateral direction (Y1), and **in that** at least one of the said individual modules (40), and preferably a plurality of the said individual modules (40) each comprises at least one stiffener (20) formed integrally with the portion of the first partition (15) and the portion of the second partition (16) of the individual module concerned.

8. Preformer according to claim 7, **characterised in that** the individual modules (40) abut according to joining planes (P40) placed obliquely, such that, in projection on the plane formed by the direction of flow (X1) and the lateral direction (Y1), the said joining planes each form a non-zero angle relative to the direction of flow (X1) which is known as the "yaw angle" (A40), so that the individual modules (40) block one another in the direction of the flow.

9. Preformer according to claim 7 or 8, **characterised in that** the individual modules (40) each have an alignment groove (42) which extends from one edge to the other of the individual module concerned in the lateral direction (Y1), such that the said individual modules (40) can be aligned on a single common key (43) engaged in the series of the said alignment grooves (42).

10. Preformer according to one of the preceding claims, **characterised in that** the first partition (15) has a thickness (E15), measured in the direction of stacking (Z1), which is between 3 mm and 30 mm, preferably between 4 mm and 20 mm, or between 4 mm and 15 mm, and/or respectively **in that** the second partition (16) has a thickness (E16), measured in the direction of stacking (Z1), which is between 3 mm and 30 mm, and preferably between 8 mm and 20 mm.

11. Preformer according to one of the preceding claims, **characterised in that** the first partition (15) and the second partition (16) have at least one set-back (65) at which the second channel (12) and the third channel (13) are both turned down towards the first channel (11) in the direction of stacking (Z1), such as to be able to form a longitudinal furrow (64) in an extruded profiled element (60) which is designed to form a tread for an outer casing, and **in that** the stiffener (20) extends in the second channel (12) and the third channel (13), vertically aligned with the said set-back (65).

12. Preformer according to one of the preceding claims, **characterised in that** the assembly in a single piece formed by the first partition (15), the second partition (16) and the at least one stiffener (20) is obtained by additive manufacturing, preferably from a steel powder.

13. Preformer according to claim 12, **characterised in that** the additive manufacturing is produced by successive layers (L1, L2, L3) created progressively in a direction of manufacture which corresponds to the direction of flow (X1) starting from a base plane (1U) which is normal to the said direction of flow (X1), **in that** at least part of the first partition (15) and/or at least part of the second partition (16) has inclination relative to the direction of flow (X1), and thus relative to the direction of manufacture, such that the superimposition of the successive layers forms steps (46), and **in that** the preformer (1) retains permanently, along these portions which are inclined in steps, an arithmetical roughness Ra which is between 4 µm and 30 µm, and which corresponds to the coarse additive manufacturing roughness defined by the said steps (46).

14. Preformer according to one of the preceding claims, **characterised in that** downstream ends of the first partition (15) and/or the second partition (16) have a composite structure comprising firstly a permanent base (50) which forms an integral part of the partition (15, 16) concerned, and is produced at the same time as the partition and the stiffener (20), from the same original material as the said partition (15, 16), and secondly a tip (51) known as a "rechargeable tip", which is obtained firstly by shaving the end of the partition (15), in order to remove material therefrom, and thus form the permanent base (50), then adding material onto the said permanent base (50) in order to constitute a tip (51) which is attached to the said base, which tip thus projects in the downstream direction relative to the permanent base (50), in the direction of flow

15. Preformer according to one of the preceding claims, **characterised in that** the stiffener (20) extends in a single piece beyond the second channel (12), through at least one of the first and third channels (11, 13), and **in that** the different component portions of the said stiffener, which appear in the channels concerned and form a leading edge (21) in the cross-section of passage of the said channels concerned, have a cylindrical form which is generated by a constant base cross-section, which, through the different channels concerned, sweeps a single straight generatrix parallel to the direction of stacking (Z1).
